(19) Europäisches Patentamt
European Patent Office
Office européen des brevets

(11) **EP 4 171 126 A1**

(12) # EUROPEAN PATENT APPLICATION
published in accordance with Art. 153(4) EPC

(43) Date of publication:
**26.04.2023 Bulletin 2023/17**

(21) Application number: **21832348.3**

(22) Date of filing: **22.06.2021**

(51) International Patent Classification (IPC):
*H04W 36/08* (2009.01)     *H04W 36/30* (2009.01)

(52) Cooperative Patent Classification (CPC):
**H04W 36/00; H04W 36/08; H04W 36/30**

(86) International application number:
**PCT/CN2021/101659**

(87) International publication number:
**WO 2022/001764 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.07.2020 CN 202010631577**

(71) Applicant: **Huawei Technologies Co., Ltd.
Longgang District,
Shenzhen,
Guangdong 518129 (CN)**

(72) Inventors:
• **QIAO, Yunfei
Shenzhen, Guangdong 518129 (CN)**
• **WANG, Xiaolu
Shenzhen, Guangdong 518129 (CN)**
• **LI, Rong
Shenzhen, Guangdong 518129 (CN)**

(74) Representative: **Gill Jennings & Every LLP
The Broadgate Tower
20 Primrose Street
London EC2A 2ES (GB)**

(54) **METHOD AND DEVICE FOR CELL SELECTION**

(57) Embodiments of this application provide a cell selection method and apparatus. The method includes: A communication apparatus obtains polarization priority information of one or more cells, performs cell measurement on the one or more cells based on the obtained polarization priority information when a cell measurement condition is met, and determines a cell to be camped on based on a measurement result of the one or more cells. In the technical solutions provided in this application, a polarization direction dimension is added during cell selection. This optimizes an existing cell selection policy, and can ensure that a terminal determines a more suitable cell to be camped on.

FIG. 3

EP 4 171 126 A1

## Description

This application claims priority to Chinese Patent Application No. 202010631577.8, filed with the China National Intellectual Property Administration on July 3, 2020 and entitled "CELL SELECTION METHOD AND APPARATUS", which is incorporated herein by reference in its entirety.

## TECHNICAL FIELD

This application relates to the field of communication technologies, and in particular, to a cell selection method and apparatus.

## BACKGROUND

A non-terrestrial network (non-terrestrial network, NTN) such as a satellite communication network has obvious advantages such as global coverage, long-distance transmission, flexible networking, convenient deployment, and being free from geographical condition limitations, and can provide services for both a fixed terminal and various mobile terminals. A conventional terrestrial network cannot provide seamless coverage, especially in a place in which a base station cannot be deployed, such as at sea, in a desert, or in the air. A non-terrestrial network is introduced into a communication network such as a fifth generation mobile communication (fifth generation, 5G) system. The non-terrestrial network provides seamless coverage for a terminal device by deploying a base station or a part of base station functions on a high-altitude platform or a satellite. In addition, the high-altitude platform or the satellite is slightly affected by a natural disaster. This improves reliability of the 5G system.

In a non-terrestrial network deployed based on a satellite, the satellite covers the ground with different beams, to form satellite cells. A terminal device may be covered by a plurality of satellite cells at a same moment. In this case, the terminal device needs to camp on a cell through cell selection or cell reselection.

However, it is found in a large quantity of tests and practices that, based on a conventional satellite cell selection or reselection mechanism (the conventional inter-satellite cell reselection mechanism is basically the same as a cell selection or cell reselection mechanism in a 5G network), it is difficult for a terminal device to camp on a suitable cell in most cases.

## SUMMARY

Embodiments of this application provide a cell selection method and apparatus, to ensure that a terminal device determines a more suitable cell to be camped on, implement load balancing, and ensure a better communication effect.

According to a first aspect, this application provides a cell selection method. The method may include: A communication apparatus obtains polarization priority information of one or more cells, performs cell measurement on the one or more cells based on the polarization priority information when a cell measurement condition is met, and determines a cell to be camped on based on a measurement result of the one or more cells.

In the cell selection method provided in the first aspect of this application, the communication apparatus performs cell measurement based on the obtained polarization priority information of the one or more cells, to determine the cell to be camped on. In other words, a polarization priority is considered when making a cell selection or reselection decision, and a polarization direction dimension is added. This optimizes an existing cell selection policy, and can ensure that a communication device determines a more suitable cell to be camped on.

In a possible implementation, the cell measurement condition includes one or more of the following: The communication apparatus is in an initial access state or a connected state; there is a neighboring cell whose cell priority is higher than that of a serving cell of the communication apparatus; or a serving cell of the communication apparatus meets a cell measurement enabling threshold.

The initial access state is a state in which the communication apparatus is just powered on and has not camped on a cell. When the communication apparatus is in an idle state or an inactive state, the cell measurement condition is related to a cell priority of a neighboring cell and signal quality in a current serving cell. When the communication apparatus is in the connected state, a terminal continuously performs measurement.

In a possible implementation, the performing the cell measurement based on the polarization priority information includes: The polarization priority information indicates priorities of two polarization directions corresponding to a cell; and the communication apparatus selects, based on the polarization priority information, a polarization direction with a higher priority for cell measurement.

After obtaining the polarization priority information, the communication apparatus performs cell measurement in the polarization direction with the higher priority, to obtain a measurement result. It should be noted that polarization priority information of a cell is determined by load, power consumption, and the like in different polarization directions of the cell. Performing measurement based on a selected polarization direction with a higher priority and selecting a cell to be camped on can implement load balancing in different polarization directions.

In a possible implementation, the determining a cell to be camped on based on a measurement result of the one or more cells includes: The communication apparatus obtains a cell measurement parameter set of the one or more cells, and determines the cell to be camped on based on the measurement result of the one or more cells and the cell measurement parameter set of the one or more cells.

The cell measurement parameter set includes parameters such as a criterion R calculation parameter, a high cell priority threshold, and a low cell priority threshold. The cell measurement parameter set is determined by the cell according to cell load, consumption, a throughput, and the like. A measurement result of a cell is related to a polarization priority, and the polarization priority is determined based on load, consumption, and the like in different polarization directions of the cell. The cell to be camped on is determined with reference to the cell measurement result and the cell measurement parameter set, so that a more suitable cell to be camped on and polarization direction can be selected from different neighboring cells. This implements load balancing.

In a possible implementation, the determining the cell to be camped on based on the measurement result of the one or more cells and the cell measurement parameter set of the one or more cells includes: obtaining an R value of each of the one or more cells based on a measurement result of the cell and a cell measurement parameter set corresponding to the cell; and determining the cell to be camped on based on the R value of the one or more cells.

For cells with a same cell priority, criterion R is used to determine a cell to be camped on. A larger R value indicates higher cell signal quality. According to the foregoing criterion, a neighboring cell whose communication quality is better than that of the current serving cell may be selected as the cell to be camped on.

In a possible implementation, an R value of the cell to be camped on is greater than or equal to an R value of the serving cell.

A larger R value indicates higher signal quality in the cell. It is ensured that the R value of the cell to be camped on is greater than or equal to that of the serving cell, so that the terminal can camp on a cell with higher signal received power and/or better signal quality. This provides communication quality.

In a possible implementation, the selecting the cell to be camped on based on the R value of the one or more cells includes: selecting a cell with a largest R value as the cell to be camped on.

After priorities of polarization directions are considered during cell measurement, the cell with the largest R value is selected as the cell to be camped on. In this way, the terminal can camp on a more suitable cell and ensure load balancing in different polarization directions.

In a possible implementation, the communication apparatus obtains the polarization priority information of the one or more cells from a broadcast message; or the communication apparatus obtains the polarization priority information of the one or more cells from a unicast message. Specifically, when the communication apparatus is in the idle state or the inactive state, the communication apparatus obtains the polarization priority information from the broadcast message; or when the communication apparatus is in the connected state, the communication apparatus obtains the polarization priority information from the unicast message, that is, a user-specific (UE-specific) message.

In a possible implementation, the polarization priority information is carried in a system information block SIB.

In an existing protocol, parameters such as cell priority information and a cell measurement parameter set are all carried in an SIB and delivered to a communication apparatus through broadcast. Therefore, it is easy for compatibility with the existing protocol by including polarization priority information in an SIB, with only existing signaling to be simply modified.

In a possible implementation, the polarization priority information indicates a polarization direction with a higher priority. Specifically, the polarization priority information includes an identifier corresponding to left-hand polarization or an identifier corresponding to right-hand polarization.

For example, if a priority corresponding to RHCP is higher, a system message carries cellReselectionRHCPPriority or another identifier corresponding to RHCP. For example, if a network device and the communication apparatus may agree in advance that "1" is used to represent RHCP, and a value of a corresponding field in the system message is 1. According to the foregoing method, a polarization priority can be represented with only one bit. This reduces bit overheads.

According to a second aspect, this application provides a cell selection method. The method includes: A network device sends a first message to a communication apparatus. The first message includes polarization priority information. The polarization priority information is for performing cell measurement when a cell measurement condition is met, to obtain a cell measurement result. The cell measurement result is for selecting a cell to be camped on by the communication apparatus.

In the cell selection method provided in the second aspect of this application, the network device sends a broadcast message carrying the polarization priority information to the communication apparatus. In this way, the communication apparatus performs cell measurement based on the polarization priority information, to determine the cell to be camped on. In other words, a polarization direction dimension is added to a cell selection or reselection policy. This optimizes an existing cell selection policy, and can ensure that a communication device determines a more suitable cell to be camped on.

In a possible implementation, that the polarization priority information is for performing cell measurement, to obtain a cell measurement result specifically includes: The polarization priority information indicates priorities of two polarization directions corresponding to a cell; and a polarization direction with a higher priority is for cell measurement.

It should be noted that polarization priority information of a cell is determined by load, power consumption, and the like in different polarization directions of the cell. Performing measurement and selecting a cell to be camped on based on a selection of a polarization direction with a higher priority can implement load balancing in different polarization directions.

In a possible implementation, the first message further includes a cell measurement parameter set, and the cell measurement parameter set, together with the cell measurement result, is for determining the cell to be camped on by the terminal device.

A cell measurement parameter set includes parameters such as a criterion R calculation parameter, a high cell priority threshold, and a low cell priority threshold. A cell measurement parameter set is determined by the cell according to cell load, consumption, a throughput rate, and the like. A measurement result of a cell is related to a polarization priority, and the polarization priority is determined based on load, consumption, and the like in different polarization directions of the cell. Selecting a cell to be camped on with reference to the cell measurement result and the cell measurement parameter set enables a selection of a more suitable cell to be camped on and polarization direction from different neighboring cells. This implements load balancing.

In a possible implementation, that the cell measurement parameter set, together with the cell measurement result, is for determining the cell to be camped on by the terminal device includes: The cell measurement parameter set and the cell measurement result are specifically for obtaining an R value, and the R value is for selecting the cell to be camped on by the communication apparatus.

For cells with a same cell priority, criterion R is used to determine a cell to be camped on. A larger R value indicates higher cell signal quality. An R value is obtained and a cell to be camped on is searched for based on a criterion R calculation parameter included in a cell measurement parameter set and a cell measurement result, and a neighboring cell whose communication quality is better than that of a current serving cell may be selected as the cell to be camped on.

In a possible implementation, the first message is a broadcast message, or the first message is a unicast message. When the terminal is in an idle state or an inactive state, the first message sent by the network device is a broadcast message. When the terminal is in a connected state, the first message sent by the network device is a unicast message, that is, a user-specific (UE-specific) message.

In a possible implementation, the polarization priority information is carried in a system information block SIB.

In an existing protocol, parameters such as cell priority information and a cell measurement parameter set are all carried in an SIB and delivered to a communication apparatus through broadcast. Therefore, it is easy for compatibility with the existing protocol by adding polarization priority information to an SIB, with only existing signaling to be simply modified.

In a possible implementation, the polarization priority information indicates a polarization direction with a higher priority. Specifically, the polarization priority information includes an identifier corresponding to left-hand polarization or an identifier corresponding to right-hand polarization.

For example, if a priority corresponding to LHCP is higher, a system message carries cellReselectionLHCPPriority or another identifier corresponding to LHCP. For example, if a network device and a communication apparatus may agree in advance that "0" is used to represent LHCP, a value of a corresponding field in the system message is 0. According to the foregoing method, a polarization priority can be represented with only one bit. This reduces bit overheads.

According to a third aspect, an embodiment of this application further provides a communication apparatus. The communication apparatus may be used as the communication apparatus according to the first aspect. The communication apparatus may be a terminal device, an apparatus (for example, a chip, a chip system, or a circuit) in a terminal device, or an apparatus that can be used together with a terminal device. In a possible implementation, the communication apparatus may include modules or units that one to one correspond to the methods/operations/steps/actions described in the first aspect. The modules or units may be hardware circuits, software, or may be implemented by a hardware circuit in combination with software. In a possible implementation, the communication apparatus may include a processing unit and a transceiver unit. The processing unit may be configured to invoke the transceiver unit to perform receiving and/or sending functions. Examples are as follows.

The transceiver unit is configured to obtain polarization priority information of one or more cells. The processing unit is configured to: perform cell measurement on the one or more cells based on the polarization priority information when a cell measurement condition is met; and determine a cell to be camped on based on a measurement result of the one or more cells.

In a possible implementation, the cell measurement condition includes one or more of the following: The communication apparatus is in an initial access state or a connected state; there is a neighboring cell whose cell priority is higher than that of a serving cell of the communication apparatus; or a serving cell of the communication apparatus meets a cell measurement enabling threshold;

In a possible implementation, that a processing unit is configured to perform cell measurement based on the polarization priority information includes: The polarization priority information indicates priorities of two polarization directions corresponding to a cell; and the processing unit is specifically configured to select a polarization direction with a higher priority based on the polarization priority information, for cell measurement.

In a possible implementation, that a processing unit is configured to determine a cell to be camped on based on a measurement result of the one or more cells includes: The processing unit is further configured to: obtain a cell measurement parameter set of the one or more cells; and determine the cell to be camped on based on the measurement result of the one or more cells and the cell measurement parameter set of the one or more cells.

In a possible implementation, that the processing unit is configured to determine the cell to be camped on based on the measurement result of the one or more cells and the cell measurement parameter set of the one or more cells includes: The processing unit is specifically configured to: obtain an R value of each of the one or more cells based on a measurement result of the cell and a cell measurement parameter set corresponding to the cell; and determine the cell to be camped on based on the R value of the one or more cells.

In a possible implementation, an R value of the cell to be camped on is greater than or equal to an R value of the serving cell.

In a possible implementation, that the processing unit is configured to select the cell to be camped on based on the R value of the one or more cells includes: The processing unit is specifically configured to select a cell with a largest R value as the cell to be camped on.

In a possible implementation, the processing unit obtains the polarization priority information of the one or more cells from a broadcast message; or the processing unit obtains the polarization priority information of the one or more cells from a unicast message.

In a possible implementation, the polarization priority information is carried in a system information block SIB.

In a possible implementation, the polarization priority information indicates a polarization direction with a higher priority. Specifically, the polarization priority information includes an identifier corresponding to left-hand polarization or an identifier corresponding to right-hand polarization.

It should be noted that, for beneficial effects of the implementations of the communication apparatus provided in the third aspect of embodiments of this application, refer to beneficial effects of the cell selection method according to the first aspect. Details are not described herein again.

According to a fourth aspect, an embodiment of this application further provides a communication apparatus. The communication apparatus may be used as the network device according to the second aspect. The communication apparatus may be a network device, an apparatus (for example, a chip, a chip system, or a circuit) in a network device, or an apparatus that can be used together with a network device. In a possible implementation, the communication apparatus may include modules or units that one to one correspond to the methods/operations/steps/actions described in the second aspect. The modules or units may be hardware circuits, software, or may be implemented by a hardware circuit in combination with software. In a possible implementation, the communication apparatus may include a processing unit and a transceiver unit. The processing unit is configured to invoke the transceiver unit to perform receiving and/or sending functions. Examples are as follows.

The processing unit is configured to determine polarization priority information. The transceiver unit is configured to send a first message to another communication apparatus. The first message includes the polarization priority information. The polarization priority information is for performing cell measurement when a cell measurement condition is met, to obtain a cell measurement result. The cell measurement result is for selecting a cell to be camped on by the communication apparatus.

In a possible implementation, that the polarization priority information is for performing cell measurement, to obtain a cell measurement result specifically includes: The polarization priority information indicates priorities of two polarization directions corresponding to a cell; and a polarization direction with a higher priority is for cell measurement.

In a possible implementation, the first message further includes a cell measurement parameter set, and the cell measurement parameter set, together with the cell measurement result, is for determining the cell to be camped on by the terminal device.

In a possible implementation, that the cell measurement parameter set, together with the cell measurement result, is for determining the cell to be camped on by the terminal device includes: The cell measurement parameter set and the cell measurement result are specifically for obtaining an R value, and the R value is for selecting the cell to be camped on by the terminal device.

In a possible implementation, the first message is a broadcast message, or the first message is a unicast message.

In a possible implementation, the polarization priority information is carried in a system information block SIB.

In a possible implementation, the polarization priority information indicates a polarization direction with a higher priority. Specifically, the polarization priority information includes an identifier corresponding to left-hand polarization or an identifier corresponding to right-hand polarization.

It should be noted that, for beneficial effects of the implementations of the communication apparatus provided in the fourth aspect of embodiments of this application, refer to beneficial effects of the cell selection method according to the fourth aspect. Details are not described herein again.

According to a fifth aspect, an embodiment of this application further provides a communication apparatus, including a processor configured to execute a computer program or executable instructions stored in a memory. When the computer program or the executable instructions are executed, the apparatus is enabled to perform the method in the first aspect and the possible implementations of the first aspect.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or a communication interface of another type.

According to a sixth aspect, an embodiment of this application further provides a communication apparatus, including a processor configured to execute a computer program or executable instructions stored in a memory. When the computer program or the executable instructions are executed, the apparatus is enabled to perform the method in the second aspect and the possible implementations of the second aspect.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or a communication interface of another type.

According to a seventh aspect, an embodiment of this application further provides a communication apparatus, including an input/output interface and a logic circuit. The input/output interface is configured to input or output a signal or data. The input/output interface is specifically configured to obtain polarization priority information of one or more cells, and the input/output interface is further configured to output a measurement result of the one or more cells. The logic circuit is configured to perform the method in the first aspect and any possible implementation of the first aspect to determine a cell to be camped on.

According to an eighth aspect, an embodiment of this application further provides a communication apparatus, including an input/output interface and a logic circuit. The logic circuit is configured to perform the method in the second aspect and any possible implementation of the second aspect to determine a first message. The first message carries polarization priority information. The input/output interface is configured to output the first message. The first message includes the polarization priority information. The input/output interface is further configured to obtain a cell measurement result.

According to a ninth aspect, an embodiment of this application further provides a computer-readable storage medium. The computer-readable storage medium stores a computer program. When the computer program is executed by a processor, a part or all of the steps of the method according to the first aspect and any possible implementation of the first aspect, or the second aspect and any possible implementation of the second aspect are performed.

According to a tenth aspect, an embodiment of this application further provides a computer program product including executable instructions. When the computer program product runs on user equipment, a part or all of the steps of the method according to the first aspect and any possible implementation of the first aspect, or the second aspect and any possible implementation of the second aspect are performed.

According to an eleventh aspect, an embodiment of this application further provides a chip system. The chip system includes a processor, may further include a memory, and is configured to implement the method according to the first aspect and any possible implementation of the first aspect, or the second aspect and any possible implementation of the second aspect. The chip system may include a chip, or may include a chip and another discrete component.

## BRIEF DESCRIPTION OF DRAWINGS

The following describes some accompanying drawings in embodiments of this application.

FIG. 1 is a schematic diagram of a communication system according to an embodiment of this application;
FIG. 2 is an application scenario according to an embodiment of this application;
FIG. 3 is a schematic flowchart of a cell selection method according to an embodiment of this application;
FIG. 4A is a schematic diagram of signaling in which a system message SIB2 includes a polarization priority according to an embodiment of this application;

FIG. 4B is a schematic diagram of signaling in which a system message SIB3 includes a polarization priority according to an embodiment of this application;

FIG. 4C is a schematic diagram of signaling in which a system message SIB4 includes a polarization priority according to an embodiment of this application;

FIG. 5 is a schematic diagram of interaction in a cell selection method according to an embodiment of this application;

FIG. 6 is a schematic diagram of interaction in a cell handover method according to an embodiment of this application;

FIG. 7 is a schematic diagram of a structure of a communication apparatus according to an embodiment of this application;

FIG. 8 is a schematic diagram of a structure of another communication apparatus according to an embodiment of this application; and

FIG. 9 is a schematic diagram of a structure of still another communication apparatus according to an embodiment of this application.

## DESCRIPTION OF EMBODIMENTS

Embodiments of this application provide a cell selection method and apparatus, to optimize an existing cell selection/cell reselection policy and determine a more suitable cell to be camped on. The method and the apparatus are based on a same application concept. Because a problem-resolving principle of the method is similar to that of the apparatus, mutual reference may be made between implementations of the apparatus and the method. No repeated descriptions are provided.

The following describes embodiments of this application with reference to the accompanying drawings in embodiments of this application.

The term "and/or" in this specification describes only an association relationship for describing associated objects and represents that three relationships may exist. For example, A and/or B may represent the following three cases: only A exists, both A and B exist, and only B exists. In the specification and claims in embodiments of this application, the terms "first", "second", and the like are intended to distinguish between different objects but do not indicate a particular sequence of the objects. For example, a first network device, a second network device, and the like are used to distinguish between different network devices, but are not used to describe a specific sequence of the target objects. In embodiments of this application, the term "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term "example" or "for example" is intended to present a related concept in a specific manner. In the descriptions of embodiments of this application, unless otherwise stated, "a plurality of" means two or more than two. For example, a plurality of processing units are two or more processing units. A plurality of systems are two or more systems.

The technical solutions of this application may be applied to a non-terrestrial network (non-terrestrial network, NTN) system such as a satellite communication system or a high-altitude platform (high altitude platform station, HAPS) communication system. A satellite communication system may be integrated with a conventional mobile communication system. For example, the mobile communication system may be a 4th generation (4th generation, 4G) communication system, for example, a long term evolution (long term evolution, LTE) system, or a worldwide interoperability for microwave access (worldwide interoperability for microwave access, WiMAX) communication system; a 5th generation (5th generation, 5G) communication system, for example, a new radio (new radio, NR) system, a future mobile communication system; or the like.

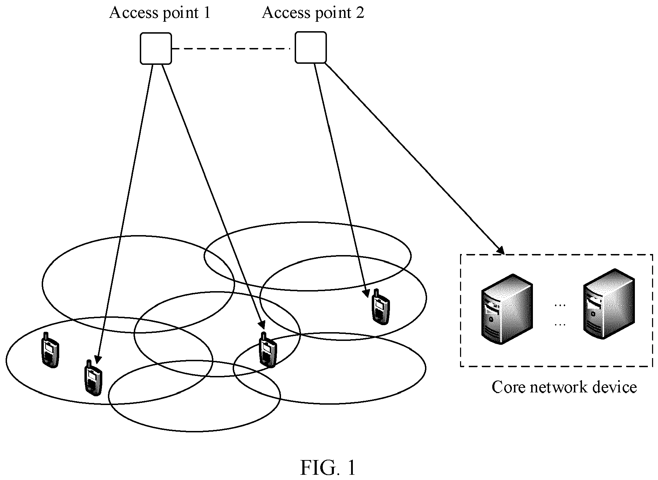

FIG. 1 shows an example of a communication system applicable to an embodiment of this application. As shown in FIG. 1, an access point covers a service area with a plurality of beams. Different beams may perform communication by using one or more of time division, frequency division, and space division. The access point is not limited to a satellite base station or a terrestrial base station. The access point may be deployed on a high-altitude platform or a satellite. The satellite may be a non-geostationary earth orbit (non-geostationary earth orbit, NGEO) satellite or a geostationary earth orbit (geostationary earth orbit, GEO) satellite. A satellite mentioned in embodiments of this application may alternatively be a satellite base station, or a network-side device disposed on a satellite.

An access point may be an evolved NodeB (evolutional NodeB, eNB, or eNodeB) in LTE, or a base station in a 5G network or a future evolved public land mobile network (public land mobile network, PLMN), a broadband network gateway (broadband network gateway, BNG), an aggregation switch, or a non-3rd Generation Partnership Project (3rd generation partnership project, 3GPP) access device, or the like. This is not specifically limited in embodiments of this application. Optionally, a base station in embodiments of this application may include base stations in various forms, for example, a macro base station, a micro base station (also referred to as a small cell), a relay station, an access point, a next-generation base station (gNodeB, gNB), a transmission reception point (transmitting and receiving point, TRP), a transmission point (transmitting point, TP), a mobile switching center, a device that provides a base station function in device-to-device (Device-to-Device, D2D), vehicle-to-everything (vehicle-to-everything, V2X), and machine-to-machine (machine-to-machine, M2M) communication, and the like. This is not specifically limited in embodiments of this application.

An access point may communicate and interact with a core network device, to provide a communication service for a terminal device. For example, the core network device is a device in a 5G core network (core network, CN). As a bearer network, a core network provides an interface to a data network, provides communication connection, authentication, management, and policy control for user equipment (UE), bears data services, and the like. The CN may further include network elements such as an access and mobility management function (Access and Mobility Management Function, AMF), a session management function (Session Management Function, SMF), an authentication server function (Authentication Server Function, AUSF), a policy control node (Policy Control Function, PCF), and a user plane function (User Plane Function, UPF).

A communication apparatus mentioned in embodiments of this application may be a terminal device, including various handheld devices, in-vehicle devices, wearable devices, or computing devices that have a wireless communication function, or another processing device connected to a wireless modem, and may be specifically user equipment (user equipment, UE), an access terminal, a subscriber unit (subscriber unit), a subscriber station, a mobile console, a mobile station (mobile station), a remote station, a remote terminal, a mobile device, a user terminal (terminal equipment), a terminal, a wireless communication device, a user agent, or a user apparatus. Alternatively, a terminal device may be a satellite phone, a cellular phone, a smart phone, a wireless data card, a wireless modem, a machine-type communication device, a cordless phone, a session initiation protocol (session initiation protocol, SIP) phone, a wireless local loop (wireless local loop, WLL) station, or a personal digital assistant (personal digital assistant, PDA) station, a handheld device or a computing device with a wireless communication function, another processing device connected to a wireless modem, an in-vehicle device, a wearable device, a virtual reality (virtual reality, VR) terminal device, an augmented reality (augmented reality, AR) terminal device; a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), a terminal device in a 5G network or a future communication network, or the like. This is not limited in this application.

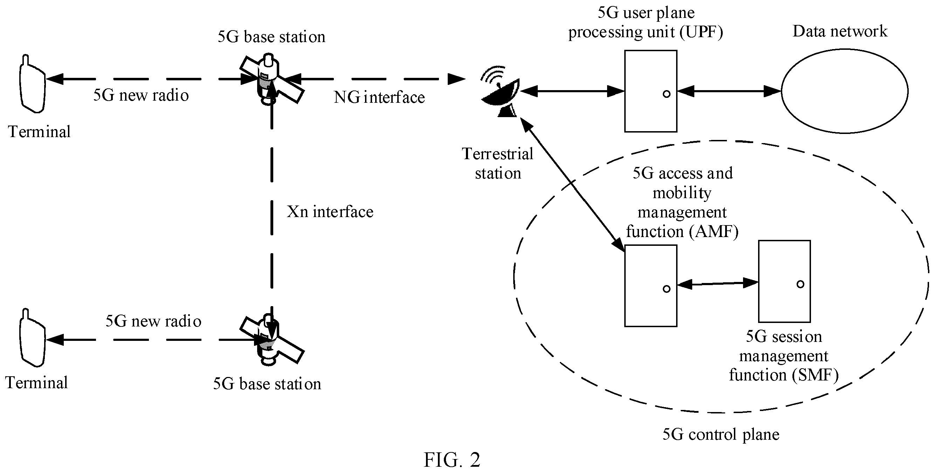

FIG. 2 shows an application scenario applicable to an embodiment of this application. Specifically, FIG. 2 shows a network application architecture in which satellite communication and a 5G technology are converged based on a related 3GPP standard. It should be noted that the application architecture does not constitute a limitation on this application. The communication method provided in embodiments of this application may be further applied to another scenario in which a terrestrial communication system and satellite communication are converged. A terrestrial mobile terminal accesses a network through 5G New Radio. A satellite serves as a 5G base station and is connected to a terrestrial core network through a radio link. In addition, there are radio links between satellites to implement signaling exchange and user data transmission between base stations. Network elements and interfaces between the network elements in FIG. 2 are described as follows.

A terminal device is a mobile device that supports 5G New Radio. The terminal device can access a satellite network through an air interface to initiate calls, access the Internet, and the like. For example, the terminal device may be any terminal device described above. Details are not described herein again.

A 5G base station mainly provides radio access services, schedules radio resources for access terminals, and provides reliable radio transmission protocols, data encryption protocols, and the like.

A 5G core network provides services such as user access control, mobility management, session management, user security authentication, and charging. The 5G core network includes a plurality of functional units, and can be divided into a control-plane functional entity and a data-plane functional entity. An access and mobility management function (AMF) is responsible for user access management, security authentication, and mobility management. A user plane function (UPF) manages user-plane data transmission, traffic statistics collection.

A terrestrial station is responsible for forwarding signaling and service data between a satellite base station and a 5G core network.

5G New Radio provides a radio link between a terminal and a base station.

An Xn interface is an interface between a 5G base station and a base station, and is mainly for signaling exchange such as handover.

An NG interface is an interface between a 5G base station and a 5G core network, and is mainly for exchange of signaling such as non-access stratum (non-access stratum, NAS) signaling of a core network and service data of a user.

For ease of understanding of embodiments of this application, cell selection and reselection mechanisms of a conventional terrestrial network are first described.

(1) Cell selection (cell selection)

After a terminal device is powered on, the terminal device first selects a suitable PLMN, and performs cell selection on the PLMN. Cell selection is classified into initial cell selection and selection based on stored cell information. Cell selection includes four steps: frequency scanning, cell searching, system message decoding, and camping.

During initial cell selection, frequency scanning is performed before cell searching. That is, a terminal scans all wireless radio frequency channels based on an NR frequency band supported by the terminal and searches for a strongest cell on each frequency. Selection based on stored cell information is to perform cell searching directly based on stored frequency information. A terminal device finds a cell with best coverage through cell searching, and synchronizes with the cell to obtain a physical cell identifier. After completing cell searching, the terminal device reads a system message of the cell, measures signal strength and signal quality in the cell, and determines whether the cell meets a camping condition.

The cell camping condition is determined based on criterion S. Cell camping is allowed when S values $S_{rxle}v$ and $S_{qual}$ for cell selection are both greater than 0.

$$S_{rxlev} = Q_{rxlevmeas} - (Q_{rxlevmin} + Q_{rxlevminoffset}) - P_{compensation} - Q_{offsettemp}$$

$$S_{qual} = Q_{qualmeas} - (Q_{qualmin} + Q_{qualminoffset}) - Q_{offsettemp}$$

$Q_{rxlevmeas}$ is a reference signal received power (reference signal received power, RSRP) value of a measured cell.

$Q_{rxlevmin}$ is a minimum RSRP received strength requirement in the cell and is obtained from a broadcast message.

$Q_{rxlevminoffset}$ is an offset value of a minimum access level and is for preventing ping-pong reselection;

$P_{compensation}$ is a compensation value and is equal to MAX(Pemax - Pumax, 0), that is, a larger value between a difference between a configured value and actual uplink transmit power of a terminal and 0.

$Q_{quaimin}$ = q-QualMin (SIB2), where q-QualMin (SIB2) is carried in a system information block (system information block, SIB) 2. If an SIB3 is configured with q-QualMinOffsetCell, $Q_{qualmin}$ = q-QualMin (SIB2) + q-QualMinOffsetCell (SIB3).

$Q_{offsettemp}$ is a temporary offset value, and the value is notified during system broadcast.

(2) Cell reselection (cell reselection)

A terminal device performs cell reselection in an idle (idle) state or an inactive (inactive) state, to obtain a better network service. Cell reselection includes the following steps: (1) measuring a current serving cell and a neighboring cell based on a measurement enabling condition; (2) determining whether a neighboring cell meets a reselection criterion; and (3) enabling reselection if the criterion is met, receiving a system message from a new cell, and camping on the new cell if there is no access restriction; or camping on the current serving cell if the criterion is not met.

The cell measurement enabling condition is related to a cell priority and signal quality in the current serving cell. As shown in Table 1, cell reselection scenarios are classified into intra-frequency cell reselection and inter-frequency/inter-RAT cell reselection.

**Table 1**

| Scenario | | Measurement condition | Cell reselection criterion |
|---|---|---|---|
| Intra-frequency cell | | S ≤ S_intrasearch, measurement is enabled. When S > S_intrasearch, measurement may be disabled. | Criterion R is met within TreselectionRAT. |
| Inter-frequency/ Inter-RAT cell | Higher priority | Measurement continues. | An S value of a higher-priority cell is greater than a preset threshold within |

(continued)

| Scenario | | Measurement condition | Cell reselection criterion |
|---|---|---|---|
| | | | TreselectionRAT. |
| | Same priority | When S ≤ S_nonintrasearch, measurement is enabled. When S > S_nonintrasearch, measurement may be disabled. | Criterion R is met within TreselectionRAT. |
| | Lower priority | When S ≤ S_nonintrasearch, measurement is enabled. When S > S_nonintrasearch, measurement may be disabled. | An S value of a serving cell within TreselectionRAT is less than a preset threshold and an S value of a lower-priority cell is greater than the preset threshold. |

In the case of intra-frequency cell reselection, when the S value of the serving cell is less than or equal to a specified threshold S_intrasearch (intra-frequency measurement threshold), intra-frequency measurement needs to be enabled. Otherwise, the UE may choose to disable measurement. In an actual network, the UE usually disables measurement when S > S_intrasearch, to reduce energy consumption. After obtaining measurement results, the terminal sorts candidate cells based on criterion R, and selects an optimal cell for camping.

Criterion R calculates an R (Rank) value for each neighboring cell and the current serving cell based on signal quality in the cells, and then sorts the neighboring cells and the current serving cell based on the R values. If an R value of a neighboring cell is greater than that of the current serving cell, the cell reselection criterion is met. If a plurality of cells have R values larger than that of the current serving cell, a cell with a highest R value is selected. If criterion R is continuously met for a period longer than TreselectionRAT and the terminal has camped on the current serving cell for more than 1s, reselection for the cell is enabled. The TreselectionRAT indicates a cell reselection interval.

The R value of the current serving cell may be calculated by using the following formula:

$$Rs = Q_{meas,s} + Q_{hyst} - Q_{offsettemp}$$

An R value of a neighboring cell can be calculated by using the following formula:

$$Rn = Q_{meas,n} - Q_{offset} - Q_{offsettemp}$$

$Q_{meas,s}$ is signal quality of the current serving cell, is obtained through cell measurement, and may be specifically an RSRP value of the serving cell. $Q_{meas,n}$ is signal quality of the neighboring cell, is obtained through cell measurement, and may be specifically an RSRP value of the neighboring cell. $Q_{hyst}$ is a reselection hysteresis value of the current serving cell and is obtained from a system. A larger value of $Q_{hyst}$ indicates a larger border of the serving cell and a lower probability of finding a neighboring cell through reselection. $Q_{offset}$ is a criterion R calculation parameter and is obtained in a system message. In the case of intra-frequency cell reselection, a value of $Q_{offset}$ is equal to $Q_{offsetcell}$. In the case of inter-frequency cell reselection, a value of $Q_{offset}$ is equal to $Q_{offsetCell} + Q_{offsetFreq}$. $Q_{offsettemp}$ is also a criterion R calculation parameter and is obtained from the system message. Values of the criterion R calculation parameters such as $Q_{hyst}$, $Q_{offset}$, and $Q_{offsettemp}$ are all greater than or equal to 0.

Inter-frequency/inter-RAT cell reselection is differentiated by priorities. For a higher-priority cell, the terminal needs to continuously perform measurement, and finds the higher-priority cell through reselection when an S value of the higher-priority cell is greater than a corresponding threshold. For a same-priority cell or a lower-priority cell, intra-frequency measurement needs to be enabled when an S value of the serving cell is greater than a specified threshold S_nonintrasearch (inter-frequency/inter-RAT measurement threshold). Otherwise, the UE may choose to disable measurement. After obtaining measurement results, the terminal selects, based on cell reselection criteria corresponding to different priority relationships, an optimal cell for camping. For a higher-priority cell, reselection for the higher-priority cell is enabled if an S value of the higher-priority cell is greater than a preset threshold ($Thresh_{X, HighQ}$ or $Thresh_{X, HighP}$) within TreselectionRAT and the terminal has camped on the current serving cell for more than 1s. For a lower-priority cell, reselection for the cell is enabled if an S value of the serving cell is less than a preset threshold ($Thresh_{Serving, LowQ}$ or $Thresh_{Serving, LowP}$) within TreselectionRAT, an S value of the lower-priority cell is greater than a preset threshold ($Thresh_{X, LowQ}$ or $Thresh_{X, LowP}$), and the terminal has camped on the current serving cell for more than 1s.

Different from a terrestrial communication system, satellite communication usually uses polarization multiplexing, such as left-hand circular polarization (Left Hand Circularly Polarized, LHCP) or right-hand circular polarization (Right Hand Circularly Polarized, RHCP); horizontal polarization or vertical polarization, or other orthogonal polarization. Different satellite cells use different polarization modes for signal transmission. This improves spectral efficiency. Load in different polarization directions of a same satellite may be different.

If satellite communication uses a mechanism that is the same as the foregoing cell selection or reselection mechanism of a conventional terrestrial network, it may be difficult for a terminal to camp on a more suitable cell in most cases. To resolve the foregoing problem, polarization multiplexing is introduced for a cell in an NTN in this application. A physical dimension for cell selection is added, and an optimized cell selection policy is implemented by indicating a polarization direction. In addition to a cell priority and signal quality in a cell, a polarization direction dimension is further considered in the cell selection and reselection policy provided in embodiments of this application, so that a more suitable cell to be camped on can be comprehensively determined, and load balancing in different polarization directions can be ensured.

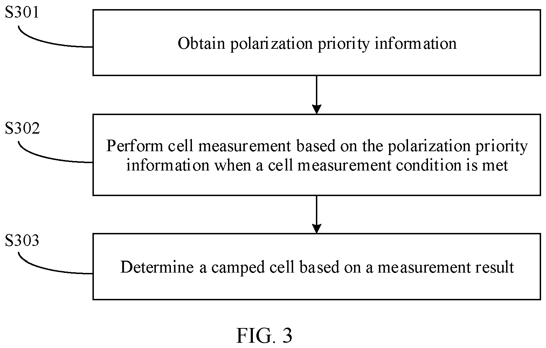

FIG. 3 is a schematic flowchart of a cell selection and reselection policy according to an embodiment of this application. In this embodiment, a network device broadcasts polarization priority information, so that a user can refer to a polarization direction when making a cell selection or cell reselection decision, to comprehensively determine a more suitable cell to be camped on.

First, it should be noted that a communication apparatus described in this application may be the foregoing terminals of various types, and the following uses a terminal as an example for description.

S301: Obtain polarization priority information.

A terminal obtains the polarization priority information. The polarization priority information indicates priorities of two or more polarization directions corresponding to a cell.

A network device sends a first message to the terminal. The first message carries the polarization priority information. Correspondingly, the terminal receives the first message sent by the network device.

Possibly, the first message is a broadcast message, or the first message is a unicast message. Specifically, when the terminal is in an idle (idle) state or an inactive (inactive) state, the first message may be a broadcast message; or when the terminal is in a connected (connected) state, the first message may be a unicast message.

In a possible implementation, the network device delivers the polarization priority information of one or more cells by using the first message. The terminal receives the first message sent by the network device, and obtains the polarization priority information from the first message.

The polarization priority information of the one or more cells delivered by the network device may include polarization priority information of a current cell, and may also include polarization priority information of a neighboring cell. Possibly, the polarization priority information is bound to a cell identifier.

Possibly, the polarization priority information may be carried in a system information block SIB. In consideration of compatibility with an existing protocol, existing signaling may be simply modified. System messages SIB2, SIB3, and SIB4 in NR are used as an example. The SIB2 includes cell reselection information related to a serving cell. The SIB3 includes information about a serving frequency and an intra-frequency neighboring cell that are related to cell reselection. The SIB4 includes information about other NR frequencies and an inter-frequency neighboring cell that are related to cell reselection.

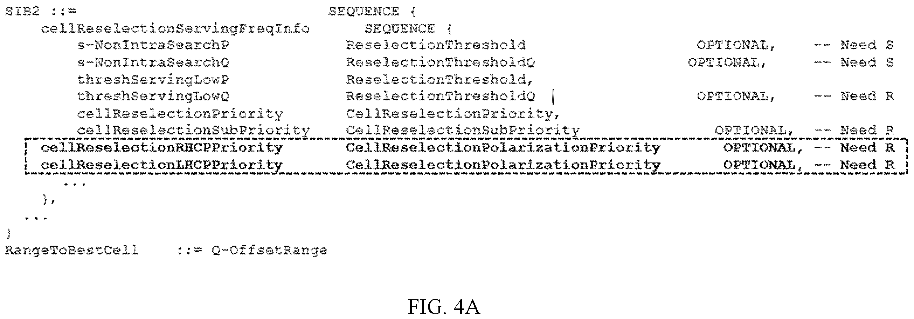

As shown in FIG. 4A, a sub-item of cell reselection serving frequency information cellReselectionServingFreqInfo in the SIB2 may further carry priorities of two polarization directions. Priorities corresponding to left-hand circular polarization and right-hand circular polarization are respectively indicated by a cellReselectionLHCPPriority field and a cellReselectionRHCPPriority field (marked by a dashed box in the figure).

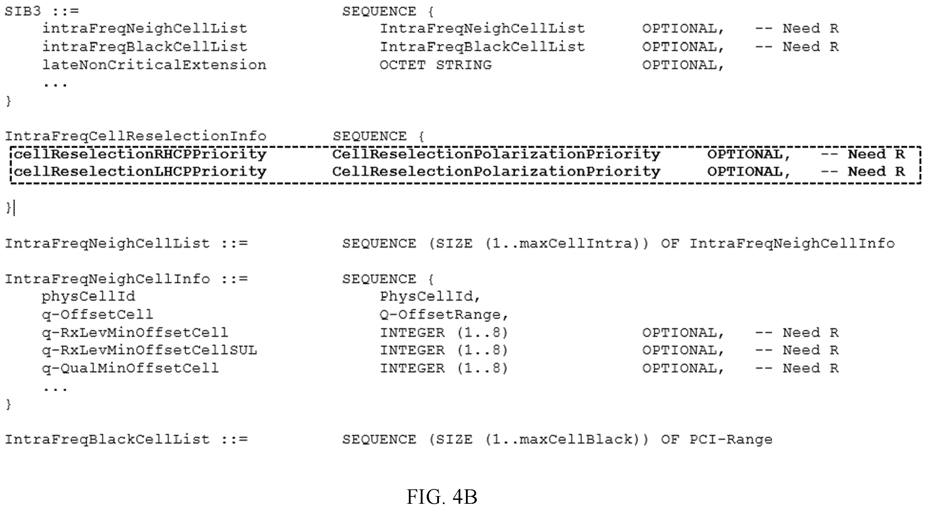

As shown in FIG. 4B, a sub-item of intra-frequency cell reselection information IntraFreqCellReselectionInfo in the SIB3 may carry priorities of two polarization directions. Priorities corresponding to left-hand circular polarization and right-hand circular polarization are respectively indicated by a cellReselectionLHCPPriority field and a cellReselection-RHCPPriority field (marked by a dashed box in the figure).

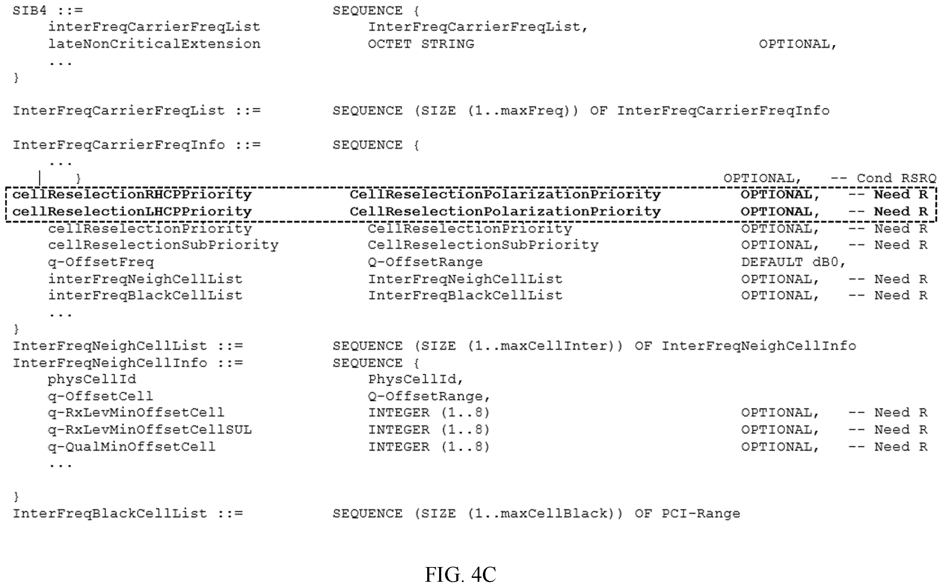

As shown in FIG. 4C, a sub-item of inter-frequency carrier frequency information InterFreqCarrierFreqInfo in the SIB4 may carry priorities of two polarization directions. Priorities corresponding to left-hand circular polarization and right-hand circular polarization are respectively indicated by a cellReselectionLHCPPriority field and a cellReselection-RHCPPriority field (marked by a dashed box in the figure).

In a possible implementation, the system message carries both polarization priority information corresponding to LHCP and polarization priority information corresponding to RHCP, and a polarization direction with a higher value is a polarization direction with a higher priority. For example, if cellReselectionLHCPPriority = 0 and cellReselectionRHCPPriority = 1, it indicates that RHCP is the polarization direction with the higher priority.

In another possible implementation, the polarization priority information indicates a polarization direction with a higher priority. Specifically, the polarization priority information includes an identifier corresponding to left-hand polarization or an identifier corresponding to right-hand polarization. For example, if the priority corresponding to RHCP is higher, the system message carries cellReselectionRHCPPriority or another identifier corresponding to RHCP, and does not carry an identifier corresponding to another polarization direction. For another example, the network device and the terminal may agree in advance that "1" is used to represent RHCP, and "0" is used to represent LHCP. If a priority corresponding to RHCP is higher, a value of a bit corresponding to the polarization priority is 1. If a priority corresponding to LHCP is higher, a value of a bit corresponding to the polarization priority is 0. Alternatively, "1" may be used to represent LHCP, and "0" may be used to represent LHCP. This is not limited in this application. In this possible implementation, the polarization priority can be represented with only one bit. This can reduce bit overheads.

It should be noted that polarization priority information of a cell is determined by load and power consumption in different polarization directions of the cell. Different vendors may use different algorithms to determine a cell priority. For example, if load in an LHCP direction of a cell is larger and load in an RHCP direction of the cell is smaller, RHCP with the smaller load is used as a higher-priority polarization direction, to achieve load balancing.

S302: Perform cell measurement based on the polarization priority information when a cell measurement condition is met.

Specifically, when the cell measurement condition is met, the terminal selects, based on the polarization priority information obtained from the first message, a polarization direction with a higher polarization priority to perform cell measurement through a measurement port.

In a possible implementation, the terminal selects, based on the polarization priority information of the one or more cells obtained from the first message, a polarization direction with a higher polarization priority of each of the one or more cells, to perform cell measurement, to obtain a cell measurement result of the one or more cells.

The cell measurement condition includes one or more of the following: The terminal is in an initial access state or a connected state; there is a neighboring cell whose cell priority is higher than that of a current serving cell of the terminal; or a serving cell of the terminal meets a cell measurement enabling threshold. It should be noted that the initial access state is a state in which the terminal is just powered on and has not camped on a cell. In this case, the terminal performs cell searching through frequency scanning or based on stored cell information to find a cell with best coverage, and synchronizes with the cell to obtain a physical cell identifier. After completing cell searching, the terminal device decodes a system message of the cell to obtain polarization priority information of the cell and another parameter related to cell selection, and performs cell measurement based on the polarization priority information.

When the terminal is in the connected state, the terminal continuously performs cell measurement, and periodically reports a measurement result to the network device or reports a measurement result to the network device under an event trigger condition.

When the terminal is in the idle state or an inactive state, measurement is enabled unconditionally if there is a neighboring cell whose cell priority is higher than that of the current serving cell. Cell priority information may be obtained from a system message SIB delivered by the current serving cell. For example, cell priority information may be indicated by cellReselectionPriority carried in the SIB message, and a value of cellReselectionPriority is an integer ranging from 0 to 7. A larger value of the parameter indicates a higher cell priority. A cell priority may be determined by cell load, power consumption, and the like. Different vendors may use different algorithms to determine a cell priority. This is not limited in this application.

When the terminal is in the idle state, and a cell priority of a neighboring cell is equal to or lower than that of the current serving cell, cell measurement is performed if the current serving cell meets the cell measurement enabling threshold. For example, for an intra-frequency cell, when an S value of the current serving cell is less than or equal to an intra-frequency measurement threshold (S_IntraSearch), the terminal performs cell measurement based on the polarization priority information. For an inter-frequency or inter-RAT cell, when an S value of the current serving cell is less than or equal to an inter-frequency measurement threshold (S_nonIntraSearch), the terminal performs cell measurement based on the polarization priority information. Specifically, when the neighboring cell is an intra-frequency cell with a same priority, and $S_{rxlev} \leq$ SIntraSearchP and $S_{qual} \leq$ SIntraSearchQ in the current serving cell, the terminal performs cell measurement based on the polarization priority information. If the neighboring cell is an inter-frequency/inter-RAT neighboring cell with a same priority or an inter-frequency/inter-RAT neighboring cell with a lower priority, and $S_{rxlev} \leq$ SnonIntraSearchP and $S_{qual} \leq$ SnonIntraSearchQ in the current serving cell, the terminal performs measurement based on the polarization priority information.

In a possible implementation, for an intra-frequency cell, when an S value of the current serving cell is less than the intra-frequency measurement threshold (S_IntraSearch), the terminal performs cell measurement based on the polarization priority information. When an S value of the current serving cell is equal to S_IntraSearch, the terminal does not perform cell measurement. For an inter-frequency or inter-RAT cell, when an S value of the current serving cell is less than an inter-frequency measurement threshold (S_nonIntraSearch), the terminal performs cell measurement based on the polarization priority information. When an S value of the current serving cell is equal to S_nonIntraSearch, the terminal does not perform cell measurement.

It should be noted that all edge cases (for example, a case in which the S value is equal to a measurement threshold) in this embodiment of this application may be processed in the foregoing manner. For example, when the S value is in the edge case, cell measurement may or may not be performed. For a calculation manner of the S value, refer to the foregoing descriptions. Details are not described herein again.

S303: Determine a cell to be camped on based on a measurement result.

The first message sent by the network device further carries a cell measurement parameter set. The cell measurement parameter set may include parameters such as a criterion R calculation parameter, a preset S value threshold of a higher-priority cell, and a preset S value threshold of a lower-priority cell. The criterion R calculation parameter includes a reselection hysteresis value $Q_{Hyst}$ of the current serving cell, an offset value $Q_{offset}$, a temporary offset value $Q_{offsettemp}$, and the like. The preset S value threshold of the higher-priority cell includes $Thresh_{X, HighQ}$ and/or $Thresh_{X, HighP}$. The preset S value threshold of the lower-priority cell includes $Thresh_{X, LowQ}$ and/or $Thresh_{X,LowP}$.

The terminal determines the cell to be camped on based on the measurement result and the cell measurement parameter set.

In a possible implementation, the terminal obtains a cell measurement parameter set of the one or more cells, and determines the cell to be camped on based on the cell measurement result of the one or more cells and the cell measurement parameter set.

When the neighboring cell is an intra-frequency cell or an inter-frequency cell with a same priority, the terminal obtains an R value of each of the one or more cells based on a measurement result of the cell and a cell measurement parameter set corresponding to the cell, and determines the cell to be camped on based on the R value of the one or more cells.

For example, an R value of the current serving cell may be obtained based on signal quality $Q_{meas,s}$ of the current serving cell that is obtained through cell measurement, a reselection hysteresis value $Q_{hyst}$ of the current serving cell and a criterion R calculation parameter $Q_{offsettemp}$ that are included in a cell measurement parameter set. An R value of the neighboring cell may be obtained based on signal quality Qmeas,n of the neighboring cell that is obtained through cell measurement and criterion R calculation parameters $Q_{offset}$ and $Q_{offsettemp}$ that are included in a cell measurement parameter set. For details, refer to the foregoing descriptions. Details are not described herein again.

That the terminal determines the cell to be camped on based on the R value of the one or more cells, where an R value of the cell to be camped on is greater than or equal to the R value of the current serving cell, specifically includes: The terminal selects the first neighboring cell whose R value is greater than or equal to the R value of the current serving cell as the cell to be camped on; the terminal selects a cell with a largest R value as the cell to be camped on; or the terminal selects a cell with a largest RSRP from neighboring cells whose R values are greater than the R value of the current serving cell as the cell to be camped on.

In a possible implementation, when an R value of a neighboring cell is equal to the R value of the current serving cell, the neighboring cell is determined as the cell to be camped on. In this possible implementation, the terminal may camp on the neighboring cell in advance, to reduce subsequent cell handover caused by satellite movement.

In another possible implementation, when an R value of a neighboring cell is equal to the R value of the current serving cell, the terminal continues to camp on the current serving cell. In this possible implementation, the terminal does not change the current cell to be camped on. This reduces a quantity of times of handover between cell to be camped ons and avoids frequent cell reselection.

When a neighboring cell is a higher-priority cell, the terminal obtains an S value of each cell based on the measurement result of the one or more cells and a cell measurement parameter set corresponding to the cell, and compares the S value with a preset threshold of the higher-priority cell that is included in the cell measurement parameter set, to determine the cell to be camped on. An S value of the cell to be camped on should be greater than the preset threshold. Specifically, when there are a plurality of cells whose S values are greater than the preset threshold, a cell with a largest S value is selected as the cell to be camped on. The S value of the cell to be camped on may be equal to the preset threshold of the higher-priority cell.

For example, the S value may be $S_{rxlev}$ and/or $S_{qual}$. For a specific calculation manner of $S_{rxlev}$ and $S_{qual}$, refer to the foregoing descriptions. Details are not described herein again. The comparing the S values with a preset threshold of a higher-priority cell in the cell measurement parameter specifically includes: comparing $S_{rxlev}$ with a threshold value $Thresh_{X, HighQ}$ included in the cell measurement parameter set, and/or comparing $S_{qual}$ with a threshold value $Thresh_{X, HighP}$ included in the cell measurement parameter set.

When a neighboring cell is a lower-priority cell, the terminal obtains an S value of each cell based on the measurement result of the one or more cells and the cell measurement parameter set corresponding to the cell, and compares the S value with a preset threshold of the lower-priority cell that is included in the cell measurement parameter set, to determine the cell to be camped on. Specifically, when the S value of the serving cell is less than the preset threshold, and an S value of a neighboring cell is greater than the preset threshold of the lower-priority cell, the neighboring cell is used as the cell to be camped on. When there are a plurality of cells whose S values are greater than the preset threshold, a cell with a largest S value is selected as the cell to be camped on. The S value of the cell to be camped on may be equal to the preset threshold of the lower-priority cell.

For example, the S value may be $S_{rxlev}$ and/or $S_{qual}$. For a specific calculation manner of $S_{rxlev}$ and $S_{qual}$, refer to the foregoing descriptions. Details are not described herein again. The comparing the S values with a preset threshold of a lower-priority cell in the cell measurement parameter specifically includes: comparing $S_{rxlev}$ with a threshold value $Thresh_{X, LowQ}$ included in the cell measurement parameter set, and/or comparing $S_{qual}$ with a threshold value $Threshx, _{LowP}$ included in the cell measurement parameter set.

In the cell selection policy shown in FIG. 3, the terminal obtains the polarization priority information delivered by the network device, and selects a polarization direction with a higher priority based on the polarization priority information for cell measurement, to determine the cell to be camped on. The network device indicates a priority of a polarization direction to ensure that the terminal selects a more suitable cell to be camped on with consideration of different polarization directions. In this way, load balancing in different polarization directions is implemented.

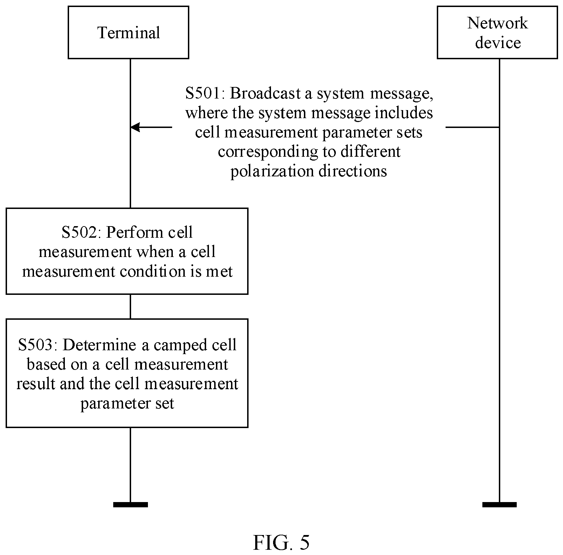

FIG. 5 is a schematic diagram of interaction of a cell selection and reselection policy according to an embodiment of this application. In this embodiment, a network device delivers different cell measurement parameter sets for different polarization directions of a same cell. A terminal calculates a corresponding threshold based on a cell measurement parameter set corresponding to each polarization direction, and comprehensively determines a more suitable cell to be camped on and a polarization direction of the cell to be camped on with reference to a cell measurement result.

S501: The network device broadcasts a system message, and correspondingly, the terminal receives the system message broadcast by the network device. The system message includes cell measurement parameter sets corresponding to different polarization directions.

The cell measurement parameter sets corresponding to the different polarization directions include parameters such as a criterion R calculation parameter corresponding to the polarization direction, a preset S value threshold of a higher-priority cell, and a preset S value threshold of a lower-priority cell. The cell measurement parameter sets corresponding to the different polarization directions may further include another parameter. This is not limited in this application.

Criterion R is used to determine a cell to be camped on. For specific content, refer to the foregoing descriptions. Details are not described herein again.

For example, an S value may be $S_{rxlev}$ and/or $S_{qual}$. For a specific calculation manner of $S_{rxlev}$ and $S_{qual}$, refer to the foregoing descriptions. Details are not described herein again.

The criterion R calculation parameter includes a reselection hysteresis value $Q_{Hyst}$ of a current serving cell, an offset value $Q_{offset}$, a temporary offset value $Q_{offsettemp}$, and the like. For example, a criterion R calculation parameter corresponding to LHCP may include $Q_{Hyst\_LHCP}$, $Q_{offset\_LHCP}$, and $Q_{offsettemp\ LHCP}$. A criterion R calculation parameter corresponding to RHCP may include $Q_{Hyst\_RHCP}$, $Q_{offset\_RHCP}$, and $Q_{offsettemp\_RHCP}$.

A preset S value threshold of a higher-priority cell includes $Thresh_{X, HighQ}$ and/or $Thresh_{X, HighP}$. For example, a preset S value threshold of a higher-priority cell corresponding to LHCP may include $Thresh_{X\_LHCP, HighQ}$ and/or $Thresh_{X\_LHCP, HighP}$. A preset S value threshold of a higher-priority cell corresponding to RHCP may include $Thresh_{X\_RHCP, HighQ}$ and/or $Thresh_{X\_RHCP, HighP}$.

A preset S value threshold of a lower-priority cell includes $Thresh_{X, LowQ}$ and/or $Thresh_{X, LowP}$. For example, a preset S value threshold of a lower-priority cell corresponding to LHCP may include $Threshx_{\ LHCP, LowQ}$ and/or $Thresh_{X\_LHCP, LowP}$. A preset S value threshold of a lower-priority cell corresponding to RHCP may include $Threshx_{\ RHCP, LowQ}$ and/or $Threshx_{\ RHCP, LowP}$. It should be noted that the parameters corresponding to different polarization directions may alternatively be represented in another manner. This is not limited in this application.

It should be noted that cell priority information may be obtained from a system message SIB delivered by the current serving cell. For example, cell priority information may be indicated by cellReselectionPriority carried in the SIB message, and a value of cellReselectionPriority is an integer ranging from 0 to 7. A larger value of the parameter indicates a higher cell priority. A cell priority may be determined by cell load, power consumption, and the like. Different vendors may use different algorithms to determine a cell priority. This is not limited in this application.

In a possible implementation, the network device broadcasts measurement parameter sets corresponding to different polarization directions of each of the one or more cells. Correspondingly, the terminal receives the measurement parameter sets corresponding to the different polarization directions of each of the one or more cells that are broadcast by the network device.

It should be noted that cell measurement parameters corresponding to different polarization directions of a cell is determined by load and power consumption in the different polarization directions of the cell. Different vendors may use different algorithms to determine a polarization priority. For example, if load in an LHCP direction of a cell is larger and load in an RHCP direction is smaller, an offset value corresponding to LHCP direction, for example, $Q_{offset\_LHCP}$ and $Q_{offsettemp\_LHCP}$, may be increased, and an offset value corresponding to RHCP direction, for example, $Q_{offset\_RHCP}$

and $Q_{offsettemp\_RHCP}$, may be reduced, to achieve load balancing in different polarization directions.

S502: Perform cell measurement when a cell measurement condition is met.

The cell measurement condition includes one or more of the following: The terminal is in an initial access state or a connected state; there is a neighboring cell whose cell priority is higher than that of a current serving cell of the terminal; or a serving cell of the communication apparatus meets a cell measurement enabling threshold. For details, refer to the content in S302. Details are not described herein again.

When the cell measurement condition is met, the terminal performs cell measurement, and obtains a cell measurement result.

In a possible implementation, the terminal measures one or more cells, and obtains a measurement result corresponding to the one or more cells.

S503: Determine the cell to be camped on based on the cell measurement result and the cell measurement parameter set.

After obtaining the cell measurement result, the terminal determines the cell to be camped on based on the measurement result, and the cell measurement parameter sets that correspond to the different polarization directions and that are obtained from the broadcast message. Specifically, the terminal calculates, based on the cell measurement result and a cell measurement parameter set corresponding to each polarization direction, thresholds corresponding to different polarization directions, and determines the cell to be camped on and a polarization direction based on the thresholds.

In a possible implementation, the terminal obtains measurement parameter sets corresponding to different polarization directions of each of the one or more cells, and determines the cell to be camped on and a polarization direction based on the measurement parameter sets corresponding to the different polarization directions of each of the one or more cells and a measurement result of each of the one or more cells.

When the neighboring cell is an intra-frequency cell or an inter-frequency cell with a same priority, the terminal obtains an R value of each of the one or more cells based on a measurement result of the cell and a cell measurement parameter set corresponding different polarization directions of the cell, and determines the cell to be camped on and a polarization direction of the cell to be camped on based on R values in different polarization directions of the one or more cells.

For example, two R values respectively corresponding to LHCP and RHCP are obtained for each cell. When criterion R is used to determine a cell to be camped on, an R value of a serving cell is compared with a larger R value in polarization directions of a neighboring cell, to determine the cell to be camped on.

An R value in an LHCP direction of the current serving cell may be obtained based on signal quality $Q_{meas,s}$ of the current serving cell that is obtained through cell measurement, a reselection hysteresis value $Q_{Hyst\_LHCP}$ tcorresponding to LHCP direction of the current serving cell that is included in a cell measurement parameter set, and a criterion R calculation parameter $Q_{offsettemp\,LHCP}$. An R value in an RHCP direction of the current serving cell may be obtained based on signal quality $Q_{meas,s}$ of the current serving cell that is obtained through cell measurement, a reselection hysteresis value $Q_{Hyst\_RHCP}$ corresponding to the RHCP direction of the current serving cell and a criterion R calculation parameter $Q_{offsettemp\,RHCP}$ that are included in a cell measurement parameter set. An R value in an LHCP direction of the neighboring cell may be obtained based on signal quality $Q_{meas,n}$ of the neighboring cell that is obtained through cell measurement and criterion R calculation parameters $Q_{offset\_LHCP}$ and $Q_{offsettemp\_LHCP}$ that are included in a cell measurement parameter set. An R value in an RHCP direction of a neighboring cell may be obtained based on signal quality $Q_{meas,n}$ of the neighboring cell that is obtained through cell measurement and criterion R calculation parameters $Q_{offset\_RHCP}$ and $Q_{offsettemp\_RHCP}$ that are included in a cell measurement parameter set. For a specific calculation manner, refer to the foregoing descriptions. Details are not described herein again.

An R value of the cell to be camped on should be greater than or equal to an R value of the current serving cell. Specifically, the terminal selects a cell with a largest R value as the cell to be camped on, and uses, as the polarization direction of the cell to be camped on, a polarization direction that corresponds to a cell measurement parameter used when the R value is obtained; the terminal selects a cell with a largest RSRP from neighboring cells whose R values are greater than or equal to the R value of the current serving cell as the cell to be camped on, and uses, as the polarization direction of the cell to be camped on, a polarization direction that corresponds to a cell measurement parameter used when the R value is obtained; or the terminal selects the first neighboring cell whose R value is greater than the R value of the current serving cell as the cell to be camped on, and uses, as the polarization direction of the cell to be camped on, a polarization direction that corresponds to a cell measurement parameter used when the R value is obtained. If two R values corresponding to the first neighboring cell whose R value is greater than the R value of the current serving cell are both greater than the R value of the serving cell, a polarization direction corresponding to a higher R value is used as the polarization direction of the cell to be camped on.

In a possible implementation, when an R value of a neighboring cell is equal to the R value of the current serving cell, the neighboring cell is determined as the cell to be camped on, and a polarization direction corresponding to the R value is used as the polarization direction of the cell to be camped on. In another possible implementation, when an R value of a neighboring cell is equal to the R value of the current serving cell, the terminal continues to camp on the current serving cell. When a neighboring cell is a higher-priority cell, the terminal obtains S values corresponding to different polarization directions of each of the one or more cells based on a measurement result of the cell and the cell measurement parameter sets corresponding to the different polarization directions of the cell, and compares the S values with preset thresholds corresponding to different polarization directions of a higher-priority cell that are included in a cell measurement parameter set, to determine the cell to be camped on. An S value of the cell to be camped on should be greater than the preset threshold. Specifically, when there are a plurality of cells whose S values are greater than the preset threshold, a cell with a largest S value is selected as the cell to be camped on. The S value of the cell to be camped on may be equal to the preset threshold.

For example, two S values corresponding to LHCP and RHCP are obtained for each cell, and are compared with preset thresholds of a higher-priority cell corresponding to different polarization directions, to determine the cell to be camped on. For example, an S value may be $S_{rxlev}$ and/or $S_{qual}$. For a specific calculation manner of $S_{rxlev}$ and $S_{qual}$, refer to the foregoing descriptions. Details are not described herein again. The comparing the S values with preset thresholds of a higher-priority cell that are included in a cell measurement parameter set specifically includes: comparing $S_{rxlev}$ corresponding to LHCP with a threshold value $Thresh_{X\_LHCP, HighQ}$ corresponding to LHCP that is included in a cell measurement parameter set, and/or comparing $S_{qual}$ with a threshold value $Thresh_{X\_LHCP, HighP}$ that is included in a cell measurement parameter set; and comparing $S_{rxlev}$ corresponding to RHCP with a threshold value $Thresh_{X\_RHCP, HighQ}$ corresponding to RHCP that is included in a cell measurement parameter set, and/or comparing $S_{qual}$ with a threshold value $Thresh_{X\_RHCP, HighP}$ that is included in a cell measurement parameter set.

When a neighboring cell is a lower-priority cell, the terminal obtains S values corresponding to different polarization directions of each of the one or more cells based on a measurement result of the cell and the cell measurement parameter sets corresponding to the different polarization directions of the cell, and compares the S values with preset thresholds corresponding to different polarization directions that are included in a cell measurement parameter set, to determine the cell to be camped on. Specifically, when an S value of the serving cell is less than the preset threshold, and an S value of a neighboring cell is greater than a preset threshold of the lower-priority cell, the neighboring cell is used as the cell to be camped on. When there are a plurality of cells whose S values are greater than the preset threshold, a cell with a largest S value is selected as the cell to be camped on. When an S value of a neighboring cell is equal to the preset threshold of the lower-priority cell, the neighboring cell may be used as the cell to be camped on, or the terminal continues to camp on the current serving cell.

For example, two S values corresponding to LHCP and RHCP of the serving cell are obtained, and are compared with a preset threshold. When the S values corresponding to the two polarization directions are both less than the preset threshold, S values corresponding to LHCP and RHCP of a neighboring cell are obtained, and are compared with preset thresholds of a lower-priority cell corresponding to different polarization directions, to determine the cell to be camped on. An S value may be $S_{rxlev}$ and/or $S_{qual}$. For a specific calculation manner of $S_{rxlev}$ and $S_{qual}$, refer to the foregoing descriptions. Details are not described herein again. The comparing the S values with preset thresholds of a lower-priority cell that are included in a cell measurement parameter set specifically includes: comparing $S_{rxlev}$ corresponding to LHCP with a threshold value $Thresh_{X\_LHCP, LowQ}$ that is included in a cell measurement parameter set, and/or comparing $S_{qual}$ corresponding to LHCP with a threshold value $Thresh_{X\_LHCP, LowP}$ of a lower-priority cell that is included in a cell measurement parameter set; and comparing $S_{rxlev}$ corresponding to RHCP with a threshold value $Thresh_{X\_RHCP, LowQ}$ that is included in a cell measurement parameter set, and/or comparing $S_{qual}$ corresponding to RHCP with a threshold value $Thresh_{X\_RHCP, LowP}$ of a lower-priority cell that is included in a cell measurement parameter set.

In the cell selection policy shown in FIG. 5, the network device delivers different cell measurement parameter values for different polarization directions. In this way, the terminal can determine a more suitable cell to be camped on and a polarization direction when performing cell selection or reselection, and implements load balancing in different polarization directions.

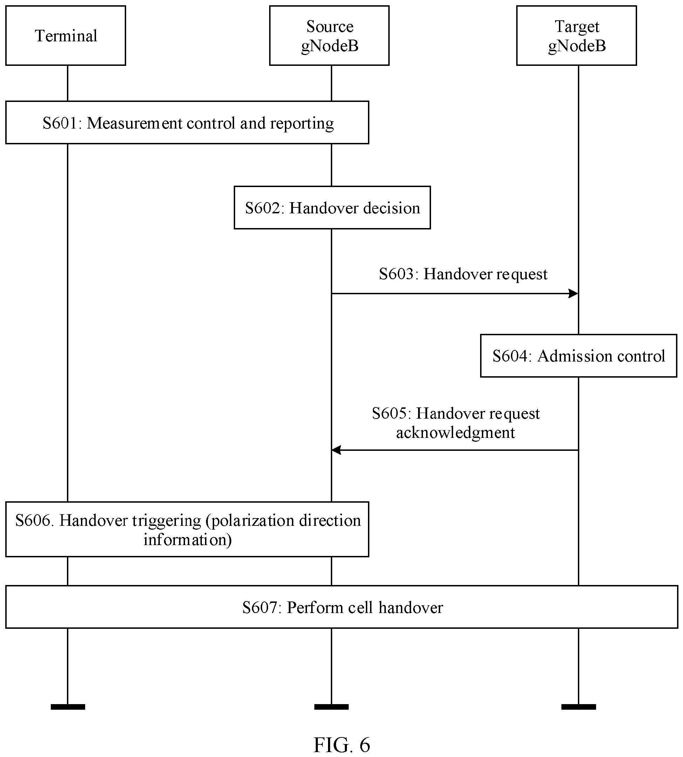

FIG. 6 is a schematic diagram of interaction in a cell handover method according to an embodiment of this application. In this embodiment, when handover is triggered, a source network device sends polarization direction indication information of a target cell to a terminal, so that the terminal determines, based on the indication, to access and camp on the target cell in a specified polarization direction. This implements load balancing in different polarization directions.

S601: Measurement control and reporting.

When a terminal is in a connected state, a first network device (for example, a source gNB in FIG. 6) sends measurement control information to the terminal. Correspondingly, the terminal receives the measurement control information delivered by the first network device. The measurement control information indicates a configuration related to measurement control.

The measurement control information is a unicast message, that is, a user-specific (UE-specific) message.

In a possible implementation, the measurement control information includes polarization priority information.

In a possible implementation, the polarization priority information includes polarization priority information corresponding to LHCP and RHCP, and different polarization directions correspond to different values of priority information. A higher value may indicate a higher priority, or a lower value may indicate a lower priority.

In another possible implementation, the polarization priority information indicates a polarization direction with a higher priority. Specifically, the polarization priority information includes an identifier corresponding to LHCP or an identifier corresponding to RHCP. Alternatively, a network device and the terminal may agree in advance that "1" is used to represent RHCP, and "0" is used to represent LHCP. If a priority corresponding to RHCP is higher, a value of a bit corresponding to the polarization priority is 1. If a priority corresponding to LHCP is higher, a value of a bit corresponding to the polarization priority is 0. Alternatively, "1" may be used to represent LHCP, and "0" may be used to represent LHCP. This is not limited in this application.

In a possible implementation, the network device delivers the measurement control information by using RRC signaling. For example, the network device delivers the measurement control information by using an RRC connection reconfiguration (RRC Connection Reconfiguration) message.

After obtaining the measurement control information, the terminal performs cell measurement based on the related configuration indicated by the measurement control information. Specifically, the terminal performs cell measurement in a polarization direction with a higher polarization priority.

That the terminal performs cell measurement is specifically: The terminal measures RSRP, reference signal received quality (reference signal received quality, RSRQ), or a signal to interference plus noise ratio (signal to interference plus noise ratio, SINR) of a current cell and a neighboring cell.

When a measurement reporting condition is met, the terminal reports a measurement result to the first network device by using an event. Correspondingly, the first network device receives the measurement result. The measurement reporting condition is the same as that in conventional technologies. Details are not described herein again.

S602: Handover decision.

The first network device performs evaluation based on the measurement result reported by the terminal, and determines whether to trigger handover.

S603: Handover request.

If a result of the handover determining is to perform cell handover, the first network device sends a handover request to a second network device (for example, a target gNB in FIG. 6). Correspondingly, the second network device receives the handover request sent by the first network device.

S604: Admission control.

After receiving the handover request, the second network device performs admission control and radio resource configuration.

S605. Handover request acknowledgment.

After completing admission and radio resource configuration, the second network device feeds back a handover request acknowledgment message to the first network device. Correspondingly, the first network device receives the handover request acknowledgment message sent by the second network device.

S606: Handover triggering.

After receiving the handover request acknowledgment message sent by the second network device, the first network device triggers handover.

In a handover triggering process, the first network device sends a handover command to the terminal. Correspondingly, the terminal receives the handover command sent by the first network device. The handover command includes information related to access of the terminal to the second network device.

In a possible implementation, in a polarization multiplexing scenario, the handover command includes indication information indicating a polarization direction of a target cell to be accessed by the terminal. The terminal determines, based on the indication information, that the terminal should access and camp on the target cell in a specified polarization direction. For example, if the indication information indicates LHCP, the terminal accesses and camps on the target cell in a left-hand circular polarization direction. If the indication information indicates RHCP, the terminal accesses and camps on the target cell in a right-hand circular polarization direction.

It should be noted that a polarization direction indicated in the handover command is determined by load, power consumption, and the like in different polarization directions of the target cell.

In a possible implementation, the indication information is carried in an RRC message. The indication information may alternatively be carried in another user-specific (UE-Specific) message. This is not limited in this application.

The handover command further includes an identifier of the target cell, a cell radio network temporary identifier (Cell Access Radio Network Temporary Identifier, C-RNTI) of the terminal, a random access resource, and the like. The handover command may further include other information. This is not limited in this application.

S607: Perform cell handover.

After triggering cell handover, the first network device performs cell handover. A specific procedure is similar to an existing cell handover procedure. For example, the terminal is detached from a source cell, and establishes synchronization with a target cell; the first network device delivers user data to the second network device, where the user data includes both buffered user data and user data that is being transmitted; the second network device buffers the user data; and the terminal establishes synchronization with the target cell and completes the handover procedure.

In the foregoing embodiment, the measurement control information delivered by the network device carries the polarization priority information, and/or indicates the polarization direction of the target cell to the terminal in the cell handover process. This achieves load balancing in different polarization directions.

The foregoing describes the method embodiments provided in this application. In embodiments of this application, a polarization direction dimension is added to a cell selection policy. In this way, a physical dimension for cell selection is added, an existing cell selection/reselection policy is optimized, and it can be ensured that a terminal determines a more suitable cell to be camped on.

To implement the functions in the foregoing methods provided in embodiments of this application, the terminal device and the network device may include a hardware structure and/or a software module, to implement the foregoing functions in a form of the hardware structure, the software module, or a combination of the hardware structure and the software module. Whether a specific function in the foregoing functions is performed by the hardware structure, the software module, or the combination of the hardware structure and the software module depends on specific applications and design constraints of the technical solutions.

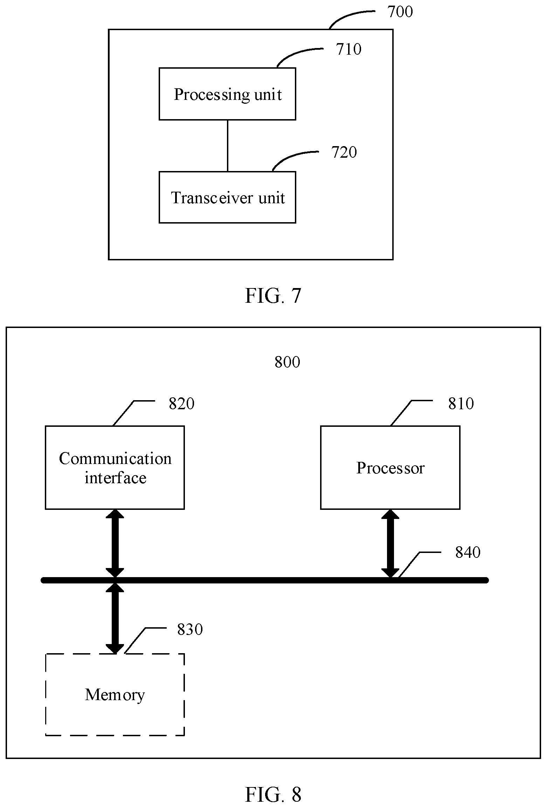

As shown in FIG. 7, based on a same technical concept, an embodiment of this application further provides a communication apparatus 700. The communication apparatus 700 may be a terminal device or a network device, an apparatus in a terminal device or a network device, or an apparatus that can be used together with a terminal device and a network device. In a possible implementation, the communication apparatus 700 may include modules or units that one to one correspond to the methods/operations/steps/actions performed by the terminal in the foregoing method embodiments. The units may be hardware circuits, software, or may be implemented by a hardware circuit in combination with software. In a possible implementation, the communication apparatus 700 may include a processing unit 710 and a transceiver unit 720. The processing unit 710 may be configured to invoke the transceiver unit 720 to perform receiving and/or sending functions.

When the communication apparatus 700 is configured to perform an operation performed by a terminal, the transceiver unit 720 is configured to obtain polarization priority information of one or more cells. The processing unit 710 is configured to: perform cell measurement on the one or more cells based on the polarization priority information when a cell measurement condition is met; and determine a cell to be camped on based on a measurement result of the one or more cells.

When the communication apparatus 700 is configured to perform an operation performed by a network device, the processing unit 710 is configured to determine polarization priority information. The transceiver unit 720 is configured to send a first message to a terminal. The first message includes the polarization priority information. The polarization priority information is for performing cell measurement when a cell measurement condition is met, to obtain a cell measurement result. The cell measurement result is for selecting a cell to be camped on by the communication apparatus.

The transceiver unit 720 is further configured to perform other receiving or sending steps or operations performed by the terminal and the network device in the foregoing method embodiments. The processing unit 710 may be further configured to perform corresponding steps or operations, other than receiving and sending, performed by the terminal and the network device in the foregoing method embodiments. Details are not described herein again.

Division into the modules in embodiments of this application is an example; and is merely logical function division, and may be other division during actual implementation. In addition, functional modules or units in embodiments of this application may be integrated into one processor, or each of the modules or units may exist alone physically, or two or more of the modules or units may be integrated into one module. The integrated modules or units may be implemented in a form of hardware, or may be implemented in a form of a software functional module.

As shown in FIG. 8, an embodiment of this application further provides a communication apparatus 800, configured to implement functions of the terminal device and the network device in the foregoing methods. The communication apparatus may be a terminal device or a network device, an apparatus in a terminal device or a network device, or an apparatus that can be used together with a terminal device and a network device. The communication apparatus 800 may be a chip system. In this embodiment of this application, the chip system may include a chip, or may include a chip and another discrete component. The communication apparatus 800 includes at least one processor 810, configured to implement the functions of the terminal device and the network device in the methods provided in embodiments of this application. The communication apparatus 800 may further include a communication interface 820. In embodiments of this application, the communication interface may be a transceiver, a circuit, a bus, a module, or a communication interface of another type, and is configured to communicate with another device via a transmission medium. For example, the communication interface 820 is for communication between an apparatus in the communication apparatus 800 and another device.

The processor 810 may perform the functions performed by the processing unit 710 in the communication apparatus 700. The communication interface 820 may be configured to perform the functions performed by the transceiver unit 720 in the communication apparatus 700.

When the communication apparatus 800 is configured to perform an operation performed by a terminal, the communication interface 820 is configured to obtain polarization priority information of one or more cells. The processor 810 is configured to: perform cell measurement on the one or more cells based on the polarization priority information when a cell measurement condition is met; and determine a cell to be camped on based on a measurement result of the one or more cells.

When the communication apparatus 800 is configured to perform an operation performed by a network device, the processor 810 is configured to determine polarization priority information. The communication interface 820 is configured to send a first message to a terminal. The first message includes the polarization priority information. The polarization priority information is for performing cell measurement when a cell measurement condition is met, to obtain a cell measurement result. The cell measurement result is for selecting a cell to be camped on by the communication apparatus.

The communication interface 820 is further configured to perform other receiving or sending steps or operations performed by the terminal and the network device in the foregoing method embodiments. The processor 810 may be further configured to perform corresponding steps or operations, other than receiving and sending, performed by the terminal and the network device in the foregoing method embodiments. Details are not described herein again.

The communication apparatus 800 may further include at least one memory 830, configured to store program instructions and/or data. The memory 830 is coupled to the processor 810. Couplings in this embodiment of this application are indirect couplings or communication connections between apparatuses, units, or modules, may be electrical, mechanical, or in another form, and are used for information exchange between the apparatuses, the units, or the modules. The processor 820 may operate in collaboration with the memory 830. The processor 810 may execute the program instructions stored in the memory 830. In a possible implementation, at least one of the at least one memory may be integrated with the processor. In another possible implementation, the memory 830 is located outside the communication apparatus 800.

In this embodiment of this application, a specific connection medium between the communication interface 820, the processor 810, and the memory 830 is not limited. In this embodiment of this application, the memory 830, the processor 810, and the communication interface 820 are connected through a bus 840 in FIG. 8, and the bus is represented by a thick line in FIG. 8. A connection mode between other components is merely schematically described, and is not limited thereto. The bus may be classified into an address bus, a data bus, a control bus, and the like. For ease of representation, only one thick line is for representing the bus in FIG. 8, but this does not mean that there is only one bus or only one type of bus.

In this embodiment of this application, the processor 810 may be one or more central processing units (Central Processing Unit, CPU). When the processor 810 is one CPU, the CPU may be a single-core CPU or a multicore CPU. The processor 810 may be a general-purpose processor, a digital signal processor, an application-specific integrated circuit, a field programmable gate array or another programmable logic device, a discrete gate or transistor logic device, or a discrete hardware component; and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In this embodiment of this application, the memory 830 may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a portable read-only memory (Compact Disc Read-Only Memory, CD-ROM), or the like. The memory is any other medium that can carry or store expected program code in a form of an instruction structure or a data structure and that can be accessed by a computer, but is not limited thereto. The memory in embodiments of this application may alternatively be a circuit or any other apparatus that can implement a storage function, and is configured to store program instructions and/or data. The memory 820 is configured to store related instructions and data.

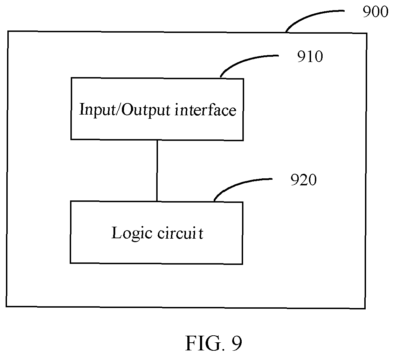

As shown in to FIG. 9, an embodiment of this application further provides an apparatus 900, configured to implement functions of the terminal device and the network device in the foregoing methods. The apparatus 900 may be a communication apparatus or a chip in a communication apparatus. The communication apparatus includes: at least one input/output interface 910 and a logic circuit 920. The input/output interface 910 may be an input/output circuit. The logic circuit 920 may be a signal processor, a chip, or another integrated circuit that can implement the methods in this application.

The at least one input/output interface 910 is configured to input or output a signal or data. For example, when the apparatus is a terminal or is used in a terminal, the input/output interface 910 is configured to obtain a first message. The first message carries polarization priority information and/or a cell measurement parameter set. Still using the method shown in FIG. 6 as an example, the input/output interface 910 may be further configured to output a cell measurement result to report the measurement result to the first network device. For example, when the apparatus is a network device or is used in a network device, the input/output interface 910 is configured to send a first message to the terminal. The message carries polarization priority information and/or a cell measurement parameter set. Still using the method shown in FIG. 6 as an example, the input/output interface 910 may be further configured to obtain a cell measurement result reported by the terminal.

The logic circuit 920 is configured to perform a part or all of the steps in any one of the methods provided in embodiments of this application. The logic circuit may implement the functions implemented by the processing unit 710 in the apparatus 700 and the processor 810 in the apparatus 800.

When the communication apparatus is a chip used in a terminal device, the chip in the terminal device implements the functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the functions of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

Based on a same concept as the foregoing method embodiments, an embodiment of this application further provides a computer-readable storage medium. The computer-readable storage medium stores a computer program. The computer program is executed by hardware (for example, a processor), to implement a part or all of the steps in any one of the methods performed by any apparatus in embodiments of this application.

Based on a same concept as the foregoing method embodiments, an embodiment of this application further provides a computer program product including instructions. When the computer program product runs on a computer, the computer is enabled to perform a part or all of the steps in any one of the methods in the foregoing aspects.

Based on a same concept as that of the foregoing method embodiments, this application further provides a chip or a chip system. The chip may include a processor. The chip may further include a memory (or a storage module) and/or a transceiver (or a communication module), or the chip is coupled to a memory (or a storage module) and/or a transceiver (or a communication module). The transceiver (or the communication module) may be configured to support the chip in wired and/or wireless communication, and the memory (or the storage module) may be configured to store a program. The processor invokes the program to implement an operation performed by the terminal or the network device in any one of the foregoing method embodiments or the possible implementations of the method embodiments. The chip system may include the chip, or may include the chip and another discrete component, such as a memory (or a storage module) and/or a transceiver (or a communication module).

Based on a same concept as the foregoing method embodiments, this application further provides a communication system. The communication system may include the foregoing terminal and/or the foregoing network device. The communication system may be configured to implement the operations performed by the terminal or the network device in any one of the foregoing method embodiments or the possible implementations of the method embodiments. For example, the communication system may have a structure shown in FIG. 1 or FIG. 2.

A part or all of the foregoing embodiments may be implemented by using software, hardware, firmware, or any combination thereof. When the software is used to implement the embodiments, a part or all of the embodiments may be implemented in a form of a computer program product. The computer program product includes one or more computer instructions. When the computer program instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, an optical disc), a semiconductor medium (for example, a solid-state drive), or the like. In the foregoing embodiments, descriptions of embodiments have respective focuses. For a part that is not described in detail in an embodiment, refer to related descriptions in other embodiments.

In the foregoing embodiments, descriptions of embodiments have respective focuses. For a part that is not described in detail in an embodiment, refer to related descriptions in other embodiments.

In the several embodiments provided in this application, it should be understood that the disclosed apparatuses may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical or another form.

The units described as separate parts may or may not be physically separate, and parts displayed as units may or may not be physical units, may be located in one position, or may be distributed on a plurality of network units. A part or all of the units may be selected based on actual needs to achieve the objectives of the solutions of embodiments.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technologies, or all or a part of the technical solutions may be implemented in a form of a software product. The software product is stored in a storage medium and includes several instructions for instructing a computer device (which may be a personal computer, a server, a network device, or the like) to perform all or a part of the steps of the methods described in embodiments of this application.

The foregoing descriptions are merely some specific implementations of this application, but are not intended to limit the protection scope of this application. Any person skilled in the art may make changes and modifications to these embodiments within the technical scope disclosed in this application. Therefore, the following claims are intended to be construed as to cover the foregoing embodiments and to indicate changes and modifications falling within the scope of this application. Therefore, the protection scope of this application shall be subject to the protection scope of the claims.

**Claims**

1. A cell selection method, comprising:

   obtaining, by a communication apparatus, polarization priority information of one or more cells;
   performing cell measurement on the one or more cells based on the polarization priority information when a cell measurement condition is met; and
   determining a cell to be camped on based on a measurement result of the one or more cells.

2. The method according to claim 1, wherein the cell measurement condition comprises one or more of the following:

   the communication apparatus is in an initial access state or a connected state;
   there is a neighboring cell whose cell priority is higher than that of a serving cell of the communication apparatus; or
   a serving cell of the communication apparatus meets a cell measurement enabling threshold.

3. The method according to claim 1 or 2, wherein

   the polarization priority information indicates priorities of two polarization directions corresponding to a cell; and
   a polarization direction with a higher priority is selected, based on the polarization priority information, for cell measurement.

4. The method according to any one of claims 1 to 3, wherein the determining a cell to be camped on based on a measurement result of the one or more cells comprises:

   obtaining, by the communication apparatus, a cell measurement parameter set of the one or more cells; and
   determining the cell to be camped on based on the measurement result of the one or more cells and the cell measurement parameter set of the one or more cells.

5. The method according to claim 4, wherein

   obtaining an R value of each of the one or more cells based on a measurement result of the cell and a cell measurement parameter set corresponding to the cell; and

determining the cell to be camped on based on the R value of the one or more cells.

6. The method according to claim 5, wherein an R value of the cell to be camped on is greater than or equal to an R value of the serving cell.

7. The method according to claim 5, wherein the selecting the cell to be camped on based on the R value of the one or more cells comprises:
selecting a cell with a largest R value as the cell to be camped on.

8. The method according to any one of claims 1 to 7, wherein the obtaining, by a communication apparatus, polarization priority information of one or more cells comprises:

obtaining, by the communication apparatus, the polarization priority information of the one or more cells from a broadcast message; or
obtaining, by the communication apparatus, the polarization priority information of the one or more cells from a unicast message.

9. The method according to any one of claims 1 to 7, wherein
the polarization priority information is carried in a system information block SIB.

10. The method according to any one of claims 1 to 9, wherein

the polarization priority information indicates a polarization direction with a higher priority; and specifically,
the polarization priority information comprises an identifier corresponding to left-hand polarization or an identifier corresponding to right-hand polarization.

11. A cell selection method, comprising:

determining, by a network device, polarization priority information; and
sending, by the network device, a first message to a communication apparatus, wherein the first message comprises the polarization priority information;
the polarization priority information is for performing cell measurement when a cell measurement condition is met, to obtain a cell measurement result; and
the cell measurement result is for selecting a cell to be camped on by the communication apparatus.

12. The method according to claim 11, wherein that the polarization priority information is for performing cell measurement, to obtain a cell measurement result specifically comprises:

the polarization priority information indicates priorities of two polarization directions corresponding to a cell; and
a polarization direction with a higher priority is for cell measurement.

13. The method according to claim 11 or 12, wherein the method further comprises:

the first message further comprises a cell measurement parameter set, and
the cell measurement parameter set, together with the cell measurement result, is for determining the cell to be camped on by the terminal device.

14. The method according to any one of claims 11 to 13, wherein
the first message is a broadcast message, or the first message is a unicast message.

15. The method according to any one of claims 11 to 13, wherein
the polarization priority information is carried in a system information block SIB.

16. The method according to any one of claims 11 to 15, wherein

the polarization priority information indicates a polarization direction with a higher priority; and specifically,
the polarization priority information comprises an identifier corresponding to left-hand polarization or an identifier corresponding to right-hand polarization.

**17.** A communication apparatus, comprising:

a transceiver unit, configured to obtain polarization priority information of one or more cells; and
a processing unit, configured to: perform cell measurement on the one or more cells based on the polarization priority information when a cell measurement condition is met; and
determine a cell to be camped on based on a measurement result of the one or more cells.

**18.** The apparatus according to claim 17, wherein the cell measurement condition comprises one or more of the following:

the communication apparatus is in an initial access state or a connected state;
there is a neighboring cell whose cell priority is higher than that of a serving cell of the communication apparatus; or
a serving cell of the communication apparatus meets a cell measurement enabling threshold.

**19.** The apparatus according to claim 17 or 18, wherein that a processing unit is configured to perform cell measurement based on the polarization priority information comprises:

the polarization priority information indicates priorities of two polarization directions corresponding to a cell; and
the processing unit is specifically configured to select a polarization direction with a higher priority based on the polarization priority information, for cell measurement.

**20.** The apparatus according to any one of claims 17 to 19, wherein that a processing unit is configured to determine a cell to be camped on based on a measurement result of the one or more cells comprises:

the processing unit is further configured to: obtain a cell measurement parameter set of the one or more cells; and
determine the cell to be camped on based on the measurement result of the one or more cells and the cell measurement parameter set of the one or more cells.

**21.** The apparatus according to claim 20, wherein that the processing unit is configured to determine the cell to be camped on based on the measurement result of the one or more cells and the cell measurement parameter set of the one or more cells comprises:

the processing unit is specifically configured to: obtain an R value of each of the one or more cells based on a measurement result of the cell and a cell measurement parameter set corresponding to the cell; and
determine the cell to be camped on based on the R value of the one or more cells.

**22.** The apparatus according to claim 21, wherein an R value of the cell to be camped on is greater than or equal to an R value of the serving cell.

**23.** The apparatus according to claim 21, wherein that the processing unit is configured to select the cell to be camped on based on the R value of the one or more cells comprises:
the processing unit is specifically configured to select a cell with a largest R value as the cell to be camped on.

**24.** The apparatus according to any one of claims 18 to 23, wherein that a transceiver unit is configured to obtain polarization priority information of one or more cells comprises:

the transceiver unit obtains the polarization priority information of the one or more cells from a broadcast message; or
the transceiver unit obtains the polarization priority information of the one or more cells from a unicast message.

**25.** The apparatus according to any one of claims 18 to 23, wherein
the polarization priority information is carried in a system information block SIB.

**26.** The apparatus according to any one of claims 18 to 25, wherein

the polarization priority information indicates a polarization direction with a higher priority, specifically,
the polarization priority information comprises an identifier corresponding to left-hand polarization or an identifier corresponding to right-hand polarization.

27. A communication apparatus, comprising:

   a processing unit, configured to determine polarization priority information; and
   a transceiver unit, configured to send a first message to another communication apparatus, wherein the first message comprises the polarization priority information;
   the polarization priority information is for performing cell measurement when a cell measurement condition is met, to obtain a cell measurement result; and
   the cell measurement result is for selecting a cell to be camped on by the communication apparatus.

28. The apparatus according to claim 27, wherein that the polarization priority information is for performing cell measurement, to obtain a cell measurement result specifically comprises:

   the polarization priority information indicates priorities of two polarization directions corresponding to a cell; and
   a polarization direction with a higher priority is for cell measurement.

29. The apparatus according to claim 27 or 28, wherein

   the first message further comprises a cell measurement parameter set, and
   the cell measurement parameter set, together with the cell measurement result, is for determining the cell to be camped on by the terminal device.

30. The apparatus according to any one of claims 27 to 29, wherein
   the first message is a broadcast message, or the first message is a unicast message.

31. The apparatus according to any one of claims 27 to 29, wherein
   the polarization priority information is carried in a system information block SIB.

32. The apparatus according to any one of claims 27 to 31, wherein

   the polarization priority information indicates a polarization direction with a higher priority, specifically,
   the polarization priority information comprises an identifier corresponding to left-hand polarization or an identifier corresponding to right-hand polarization.

33. A communication apparatus, comprising a processor configured to execute a computer program, wherein when the computer program is executed, the apparatus is enabled to:

   perform the method according to any one of claims 1 to 10, or
   perform the method according to any one of claims 11 to 16.

34. The communication apparatus according to claim 35, further comprising a memory configured to store the computer program.

35. A computer-readable storage medium, comprising a computer program, wherein when the computer program is executed on a computer,

   the method according to any one of claims 1 to 10 is performed, or
   the method according to any one of claims 11 to 16 is performed.

36. A communication apparatus, comprising an input/output interface and a logic circuit, wherein

   the input/output interface is configured to obtain polarization priority information of one or more cells; and
   the logic circuit is configured to determine a cell to be camped on by using the method according to any one of claims 1 to 10.

37. The apparatus according to claim 36, wherein
   the input/output interface is further configured to output a measurement result of the one or more cells.

38. A communication apparatus, comprising an input/output interface and a logic circuit, wherein

the logic circuit is configured to determine a first message by using the method according to any one of claims 11 to 16, and
the input/output interface is configured to output the first message, wherein the first message comprises polarization priority information.

39. The apparatus according to claim 38, wherein
the input/output interface is further configured to obtain a cell measurement result.

40. A computer program product comprising instructions, wherein when the computer program product runs on a computer, the method according to any one of claims 1 to 10 is performed, or the method according to any one of claims 11 to 16 is performed.

41. A communication system, comprising the communication apparatus according to any one of claims 17 to 26 and the communication apparatus according to any one of claims 27 to 32.

Access point 1      Access point 2

Core network device

FIG. 1

5G user plane
processing unit (UPF)          Data network

5G base station

Terminal   ←--- 5G new radio ---  →   NG interface  →

Terrestrial
station

5G access and
mobility
management
function (AMF)

Xn interface

5G new radio

Terminal        5G base station

5G session
management
function (SMF)

5G control plane

FIG. 2

EP 4 171 126 A1

S301

Obtain polarization priority information

S302

Perform cell measurement based on the polarization priority information when a cell measurement condition is met

S303

Determine a camped cell based on a measurement result

FIG. 3

```
SIB2 ::=                                SEQUENCE {
    cellReselectionServingFreqInfo         SEQUENCE {
        s-NonIntraSearchP                  ReselectionThreshold              OPTIONAL,     -- Need S
        s-NonIntraSearchQ                  ReselectionThresholdQ             OPTIONAL,     -- Need S
        threshServingLowP                  ReselectionThreshold,
        threshServingLowQ                  ReselectionThresholdQ |           OPTIONAL,     -- Need R
        cellReselectionPriority            CellReselectionPriority,
        cellReselectionSubPriority         CellReselectionSubPriority        OPTIONAL,  -- Need R
        cellReselectionRHCPPriority        CellReselectionPolarizationPriority    OPTIONAL, -- Need R
        cellReselectionLHCPPriority        CellReselectionPolarizationPriority    OPTIONAL, -- Need R
        ...
    },
    ...
}
RangeToBestCell     ::= Q-OffsetRange
```

FIG. 4A

```
SIB3 ::=                                SEQUENCE {
    intraFreqNeighCellList                  IntraFreqNeighCellList      OPTIONAL,    -- Need R
    intraFreqBlackCellList                  IntraFreqBlackCellList      OPTIONAL,    -- Need R
    lateNonCriticalExtension                OCTET STRING                OPTIONAL,
    ...
}

IntraFreqCellReselectionInfo        SEQUENCE {
    cellReselectionRHCPPriority         CellReselectionPolarizationPriority      OPTIONAL,    -- Need R
    cellReselectionLHCPPriority         CellReselectionPolarizationPriority      OPTIONAL,    -- Need R

}|

IntraFreqNeighCellList ::=              SEQUENCE (SIZE (1..maxCellIntra)) OF IntraFreqNeighCellInfo

IntraFreqNeighCellInfo ::=              SEQUENCE {
    physCellId                              PhysCellId,
    q-OffsetCell                            Q-OffsetRange,
    q-RxLevMinOffsetCell                    INTEGER (1..8)              OPTIONAL,    -- Need R
    q-RxLevMinOffsetCellSUL                 INTEGER (1..8)              OPTIONAL,    -- Need R
    q-QualMinOffsetCell                     INTEGER (1..8)              OPTIONAL,    -- Need R
    ...
}

IntraFreqBlackCellList ::=              SEQUENCE (SIZE (1..maxCellBlack)) OF PCI-Range
```

FIG. 4B

```
SIB4 ::=                              SEQUENCE {
    interFreqCarrierFreqList              InterFreqCarrierFreqList,
    lateNonCriticalExtension              OCTET STRING                        OPTIONAL,
    ...
}

InterFreqCarrierFreqList ::=          SEQUENCE (SIZE (1..maxFreq)) OF InterFreqCarrierFreqInfo

InterFreqCarrierFreqInfo ::=          SEQUENCE {
    ...
    }                                                                         OPTIONAL,    -- Cond RSRQ
    cellReselectionRHCPPriority           CellReselectionPolarizationPriority   OPTIONAL,    -- Need R
    cellReselectionLHCPPriority           CellReselectionPolarizationPriority   OPTIONAL,    -- Need R
    cellReselectionPriority               CellReselectionPriority               OPTIONAL,    -- Need R
    cellReselectionSubPriority            CellReselectionSubPriority            OPTIONAL,    -- Need R
    q-OffsetFreq                          Q-OffsetRange                         DEFAULT dB0,
    interFreqNeighCellList                InterFreqNeighCellList                OPTIONAL,    -- Need R
    interFreqBlackCellList                InterFreqBlackCellList                OPTIONAL,    -- Need R
    ...
}
InterFreqNeighCellList ::=            SEQUENCE (SIZE (1..maxCellInter)) OF InterFreqNeighCellInfo
InterFreqNeighCellInfo ::=           SEQUENCE {
    physCellId                            PhysCellId,
    q-OffsetCell                          Q-OffsetRange,
    q-RxLevMinOffsetCell                  INTEGER (1..8)                        OPTIONAL,    -- Need R
    q-RxLevMinOffsetCellSUL               INTEGER (1..8)                        OPTIONAL,    -- Need R
    q-QualMinOffsetCell                   INTEGER (1..8)                        OPTIONAL,    -- Need R
    ...

}
InterFreqBlackCellList ::=           SEQUENCE (SIZE (1..maxCellBlack)) OF PCI-Range
```

FIG. 4C

EP 4 171 126 A1

FIG. 5

FIG. 6

700

710

Processing unit

720

Transceiver unit

**FIG. 7**

800

820

Communication interface

810

Processor

840

830

Memory

**FIG. 8**

FIG. 9

## INTERNATIONAL SEARCH REPORT

| International application No. |
|---|
| **PCT/CN2021/101659** |

**A. CLASSIFICATION OF SUBJECT MATTER**

H04W 36/08(2009.01)i;  H04W 36/30(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

WPI; EPODOC; CNPAT; CNKI; 3GPP: satellite, polarization, reuse, mode, state, cell, reselect+, select+, measurement, RHCP, LHCP, NTN, non terrestrial networks, 选择, 优先级, 测量, 小区, 卫星, R值, 极化, 极化模式, 重选

**C. DOCUMENTS CONSIDERED TO BE RELEVANT**

| Category* | Citation of document, with indication, where appropriate, of the relevant passages | Relevant to claim No. |
|---|---|---|
| PX | CN 112566195 A (HUAWEI TECHNOLOGIES CO., LTD.) 26 March 2021 (2021-03-26) description paragraphs [0076]-[0265] | 1-41 |
| Y | CN 101841875 A (ZTE CORPORATION) 22 September 2010 (2010-09-22) description, paragraphs [0003]-[0022] | 1-41 |
| Y | HUAWEI et al. "R1-1911859 Discussion on physical layer control procedures for NTN" *3GPP TSG RAN WG1 Meeting #99*, 22 November 2019 (2019-11-22), section 2.4 | 1-41 |
| A | CN 108419277 A (ACER INC.) 17 August 2018 (2018-08-17) entire document | 1-41 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 August 2021** | **31 August 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/101659**

| Patent document cited in search report | | | Publication date (day/month/year) | Patent family member(s) | | | Publication date (day/month/year) |
|---|---|---|---|---|---|---|---|
| CN | 112566195 | A | 26 March 2021 | WO | 2021057490 | A1 | 01 April 2021 |
| CN | 101841875 | A | 22 September 2010 | | None | | 09 August 2018 |
| CN | 108419277 | A | 17 August 2018 | TW | 201830992 | A | 16 August 2018 |
| | | | | US | 2018227822 | A1 | 09 August 2018 |
| | | | | EP | 3361787 | A1 | 15 August 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010631577